# EUROPEAN PATENT SPECIFICATION

(11) **EP 4 213 594 B1**
(45) Date of publication and mention of the grant of the patent: **29.07.2026**
(21) Application number: 22152028.1
(22) Date of filing: 18.01.2022
(51) Int. Cl.: H05B 33/14, C09K 11/77

(54) **ALUMINUM GARNET NANOPARTICLES**
ALUMINIUM-GRANAT-NANOPARTIKEL
NANOPARTICULES DE GRENAT D'ALUMINIUM

(43) Date of publication of application: 19.07.2023
(73) Proprietor: Seaborough Materials IP B.V., 1098 XG Amsterdam (NL); Ecole Normale Supérieure de Lyon, 69007 Lyon (FR); CENTRE NATIONAL DE LA RECHERCHE SCIENTIFIQUE, 75016 Paris (FR); UNIVERSITE CLAUDE BERNARD - LYON 1, 69100 Villeurbanne (FR)
(72) Inventor: YAN, Yige, Lyon (FR); CHAPUT, Frédéric, Villeurbanne (FR); LEROUGE, Frédéric, Lyon (FR); PAROLA, Stéphane, Jonage (FR)
(74) Representative: Hoyng Rokh Monegier B.V.

(56) References cited:
- WO-A1-2018/167266
- CN-B- 106 905 970
- US-A1- 2015 166 888
- HUH YOUNG-DUK: "The Optical Properties of(Y 1-x Gd x ) 3-z (Al 1-y Ga y ) 5 O 12 :Ce z Phosphors for White LED", BULLETIN OF THE KOREAN CHEMICAL SOCIETY, vol. 23, no. 10, 20 October 2002 (2002-10-20), KR, pages 1435 - 1454, XP055973246, ISSN: 0253-2964, Retrieved from the Internet <URL:http://journal.kcsnet.or.kr/main/j_search/j_archives.htm?qpage=j_search&spage=b_bkcs&dpage=ar> DOI: 10.5012/bkcs.2002.23.10.1435

## Description

### FIELD OF THE INVENTION

The invention relates to rare-earth metal doped aluminum-based garnet nanoparticles. The invention further relates to methods of making rare-earth metal doped aluminum-based garnet nanoparticles. The invention further relates to luminescent materials and compositions comprising the nanoparticles of the invention. The invention further relates to devices comprising the luminescent material and/or composition of the invention.

### BACKGROUND OF THE INVENTION

Luminescent down-conversion materials play an important role in solid-state lighting devices for illumination and display applications, among others.

Y₃Al₅O₁₂:Ce (YAG:Ce) is a well-known down-conversion material used on micron-scale in various applications, such as white LEDs.

Lu₃Al₅O₁₂:Ce (LuAG:Ce) is similarly a well-known down-conversion material used on micron-scale in various applications, such as white LEDs.

WO2018/167266 discloses compositions comprising a light emitting material and a sensitizer material, wherein the light emitting material and the sensitizer material are selected such that the sensitizer material has an emission spectrum which overlaps at least partly with one or more excitation bands of the light emitting material and wherein the light emitting material and sensitizer material are so arranged to each other to allow non-radiative energy transfer from the sensitizer material to the light emitting material. This application also describes methods for the preparation thereof.

Non-radiative energy transfer (sometimes also referred to as Fluorescent Resonance Energy Transfer, FRET) from the sensitizer material to the light emitting material involves the non-radiative transfer of energy from an excited sensitizer ion in the sensitizer material to an acceptor (or emitter) ion in the light emitting material. It is evidenced by increased emission from an emitter ion in the light emitting material upon selective excitation of the sensitizer ion in the sensitizer material.

Nanomaterials are of interest due to their high surface area and small volume, which enables to arrange luminescent materials close in space to harness inter-particle FRET.

US 2015/0166888 A1 discloses a light emitting device that comprises a blue semiconductor light-emitting element, and a wavelength conversion member, wherein the wavelength conversion member comprises:
a phosphor Y represented by formula (Y1) below and having a peak wavelength of 540 nm or more and 570 nm or less in an emission wavelength spectrum when excited at 450 nm,
(Y,Ce,Tb,Lu)x(Ga,Sc,Al)yOz (Y1) (x=3, 4.5≦/y≦/5.5, 10.85≦/z≦/13.4); and
a phosphor G represented by formula (G1) below and having a peak wavelength of 520 nm or more and 540 nm or less in an emission wavelength spectrum when excited at 450 nm
(Y,Ce,Tb,Lu)x(Ga,Sc,Al)yOz (G1) (x=3, 4.5≦/y≦/5.5, 10.8≦/z≦/13.4). The phosphors may be prepared using the method disclosed in Huh et al. (Bull. Korean Chem. Soc. 2002, Vol. 23, No. 1, p. 1435-1438), which discloses a solid state reaction.

A glycothermal synthesis method to obtain nanoscale YAG:Ce is presented in Odziomek et al. J. Mater. Chem. C, 2017, 5,12561. The particle size reported is ~8 nm and the photoluminescence quantum yield (QY) appears low.

Thus, there is a need for rare-earth metal doped garnet particles exhibiting increased photoluminescence QY while keeping the obtained particles small (< 20 nm) and for a method for the preparation thereof.

### SUMMARY OF THE INVENTION

According to the invention, there is provided a method for preparing rare-earth metal doped garnet nanoparticles, comprising:
a. preparing a mixture comprising (i) yttrium salt and/or yttrium alkoxide and/or lutetium salt and/or lutetium alkoxide, (ii) aluminum salt and/or aluminum alkoxide, (iii) rare earth metal salt and/or rare earth metal alkoxide, (iv) phosphate salt and/or organic phosphate, and (v) a solvent comprising a glycol,
b. heating the mixture, and
c. subjecting the mixture to a precipitation stage.

According to the invention, there is further provided rare-earth metal doped garnet nanoparticles obtainable by the method of the invention, wherein the nanoparticles comprise phosphorus, or comprise a Y₃Al₅O₁₂:RE (YAG:RE), Lu₃Al₅O₁₂:RE (LuAG:RE) or (Yₓ,Lu₍₁₋ₓ₎)₃Al₅O₁₂:RE ((Lu,Y)AG:RE) phase coexisting with a phosphorus-containing phase.

According to the invention there is further provided a luminescent composition comprising a first luminescent material capable of emitting light in a first wavelength range and a second luminescent material being capable of absorbing light in a second wavelength range, and having an emission spectrum which overlaps at least partly with one or more of the excitation bands of said first luminescent material, wherein at least one of said first luminescent material or said second luminescent material comprises the nanoparticles according to the invention.

The nanoparticles according to the invention show good absorption/emission properties and are suited for mixing in luminescent compositions. They have high photoluminescence quantum yield (QY) and crystallinity, even at small particle sizes. They can advantageously be used in compositions, wherein non-radiative energy transfer (sometimes also referred to as Fluorescent Resonance Energy Transfer, FRET) is desired.

The method according to the invention allows obtaining the nanoparticles according to the invention.

### BRIEF DESCRIPTION OF THE FIGURES

FIGURE 1 shows a size histogram of YAG nanoparticles made via the procedure known in the art and comparative example A.
FIGURE 2 shows the emission and excitation spectra of these nanoparticles.
FIGURE 3 shows the XRD of these nanoparticles and a YAG reference pattern.
FIGURE 4 shows a size histogram of YAG nanoparticles made with extra yttrium added in the reaction mixture as described in comparative example B.
FIGURE 5 shows the emission and excitation spectra of these nanoparticles.
FIGURE 6 shows the particle size and yield of the small fraction as function of Al/DEG ration in the reaction mixture.
FIGURE 7 shows the size histogram of YAG nanoparticles made with phosphate added in the reaction mixture as described in example 1.
FIGURE 8 shows the emission spectrum of these nanoparticles.
FIGURE 9 shows the XRD of these nanoparticles and a YAG reference pattern. An additional peak at 25.8 2Θ (arrow pointing) indicates the presence of a PO₄ phase.
FIGURE 10 shows the size histogram of YAG nanoparticles made with phosphate and extra yttrium added in the reaction mixture as described in example 2.
FIGURE 11 shows the emission and excitation spectra of these nanoparticles.
FIGURE 12 shows the XRD of these nanoparticles and a YAG reference pattern. An additional peak at 25.8 2Θ (arrow pointing) indicates the presence of a PO₄ phase.
FIGURE 13 shows the size vs. QY of the YAG:Ce samples made according to comparative experiments A and B, and examples 1 and 2.
FIGURE 14 shows the emission spectrum of a luminescent composition comprising YAG:Ce,Tb nanoparticles made according to the invention and Y₂O₃:Eu nanoplatelets. Excitation was performed at a wavelength of 440 nm. Peaks characteristic for both YAG: Ce,Tb and Eu³⁺ are observed, which indicates IFRET.

### DETAILED DESCRIPTION OF THE INVENTION

### Preparation method

The invention provides a method for preparing rare-earth metal doped garnet nanoparticles.

### Stage a.

The method according to the invention for prepare rare-earth metal doped garnet nanoparticles comprises mixing (i) yttrium salt and/or yttrium alkoxide and/or a lutetium salt and/or lutetium alkoxide, (ii) aluminum salt and/or aluminum alkoxide, (iii) rare earth metal salt and/or rare earth metal alkoxide, (iv) phosphate salt or organic phosphate, and (v) a solvent comprising a glycol to obtain a mixture.

Any suitable yttrium salt and/or alkoxide, lutetium salt and/or alkoxide, aluminum salt and/or alkoxide and rare earth metal salt and/or alkoxide may be used that can be dissolved in the solvent comprising a glycol, for instance at the temperature at which the mixture is heated in stage b.

The skilled person is able to determine the relative amounts of the salts and/or alkoxides such as to obtain the desired ratios of the ions in the nanoparticles.

### (i) yttrium salt and/or alkoxide or lutetium salt and/or alkoxide

In an embodiment, an yttrium salt and/or yttrium alkoxide is used. This allows to obtain yttrium aluminum garnet (YAG)-type nanoparticles.

Preferably, the yttrium salt is selected from the group consisting of halides, acetates, acetylacetonates, sulfates, nitrates, and/or a hydrated form of these substances. More preferably, the yttrium salt is selected from acetates or a hydrated form thereof.

Preferably, the yttrium alkoxide has the formula Y(OR)₃, wherein RO⁻ is the alkoxide and R is a C1-C4 group. Preferably, the alkoxide is an isopropoxide, ethoxide and/or tert-butoxide.

In an embodiment, a lutetium salt and/or lutetium alkoxide is used. This allows to obtain lutetium aluminum garnet (LuAG)-type nanoparticles.

Preferably, the lutetium salt is selected from the group consisting of halides, acetates, acetylacetonates, sulfates, nitrates, and/or a hydrated form of these substances. More preferably, the lutetium salt is selected from acetates or a hydrated form thereof.

Preferably, the lutetium alkoxide has the formula Lu(OR)₃, wherein RO⁻ is the alkoxide and R is a C1-C4 group. Preferably, the alkoxide is an isopropoxide, ethoxide and/or tert-butoxide.

In an embodiment, a mixture of an yttrium and a lutetium salt and/or alkoxide is used. This allows to obtain yttrium lutetium aluminum garnet ((Y,Lu)AG)-type nanoparticles.

As previously stated, the skilled person is able to determine the relative amounts of the salts and/or alkoxides such as to obtain the desired ratios of the ions in the nanoparticles. The skilled person is therefore able to determine the amount of yttrium and/or lutetium relative to the amount of aluminum, to obtain the desired YAG:RE or LuAG:RE ratios. The skilled person is also able to determine the amount of rare earth relative to yttrium and/or lutetium to obtain the desired doping concentrations. In stoichiometric aluminum garnets the ratio of (rare earth + yttrium + lutetium)/Al is 0.6.

Preferably, the mixture further comprises additional yttrium salt and/or alkoxide and/or lutetium salt and/or alkoxide and/or rare earth salt and/or alkoxide. Preferably, the amount of additional Y and/or Lu and/or rare earth in the mixture is at least the molar equivalent of phosphate. More preferably, the amount of further Y and/or Lu and/or rare earth is at least 1.8 times the molar equivalent of phosphate. This is found to improve the quality and luminescence efficiency of the nanocrystals and to facilitate obtaining a small particle size. Without being bound by theory, it is thought that this facilitates the formation of (Y or Lu or rare earth)PO₄ without interfering with the formation of YAG or LuAG.

Preferably, the yttrium salt and/or alkoxide and/or lutetium salt and/or alkoxide is present in the mixture in an amount such that the molar (Y and/or Lu):Al ratio is at least about 0.25, preferably at least about 0.3. The molar (Y and/or Lu):Al ratio is preferably at most about 1.8, more preferably at most about 1.75.

Preferably, some of the yttrium salt and/or alkoxide and/or lutetium salt and/or alkoxide is substituted by a gadolinium salt and/or alkoxide. This may result in gadolinium substitution at some of the yttrium or lutetium sites in the YAG/LuAG/(Y,Lu)AG-lattice, and can result in a shift of the excitation/emission spectrum. Thus, the substitution of the yttrium salt and/or alkoxide and/or lutetium salt and/or alkoxide by a gadolinium salt and/or alkoxide can be used to tune the excitation/emission spectrum of the product.

### (ii) aluminum salt and/or alkoxide

Preferably, the aluminum salt is selected from the group consisting of halides, acetates, acetylacetonates, sulfates, nitrates, and/or a hydrated form of these substances.

Preferably, the aluminum alkoxide has the formula Al(OR)₃, wherein RO⁻ is the alkoxide and R is a C1-C4 group. Preferably, the alkoxide is an isopropoxide, ethoxide and/or tert-butoxide.

More preferably, aluminum isopropoxide is used.

Preferably, some of the aluminum salt and/or alkoxide is substituted by a gallium salt and/or alkoxide. This may result in gallium substitution at some of the aluminum sites in the YAG/LuAG/(Y,Lu)AG-lattice, and can result in a shift of the excitation/emission spectrum. Thus, the substitution of the aluminum salt and/or alkoxide by a gallium salt and/or alkoxide can be used to tune the excitation/emission spectrum of the product.

### (iii) rare earth metal salt and/or alkoxide

Preferably, the rare earth metal salt is selected from the group consisting of halides, acetates, acetylacetonates, sulfates, nitrates, and/or a hydrated form of these substances. More preferably, the rare earth metal salt is selected from acetates or a hydrated form thereof.

Preferably, the rare earth metal alkoxide has the formula RE(OR)₃, wherein RO⁻ is the alkoxide and R is a C1-C4 group. Preferably, the alkoxide is an isopropoxide, ethoxide and/or tert-butoxide.

Preferably, the rare earth metal is cerium and/or terbium. Ce³⁺ shows, upon suitable excitation, yellow-green emission. Tb³⁺ shows, upon suitable excitation, green emission. More preferably, the rare earth metal is a combination of cerium and terbium.

The rare earth metal is present as a dopant. Preferably, the doping ratio is between 0.01% and 3% for cerium doped nanoparticles, more preferably the doping ratio is 2.5%. As used herein, the doping ratio is the percentage of doping ions relative to the total of doping ions and yttrium or lutetium atoms in the crystal lattice.

Preferably, in the case of nanoparticles co-doped with both cerium and terbium, the doping ratio of cerium is between about 0.01% and about 2.5%, and the doping ratio of terbium is at least about 30%.

Preferably, the rare earth metal salt and/or alkoxide is present in the mixture such that the molar RE:Al ratio is at least about 0.25, preferably at least about 0.3. The molar RE:Al ratio is preferably at most about 1.5, more preferably at most about 1.45.

### (iv) phosphate salt and/or organic phosphate

Preferably the phosphate salt and/or organic phosphate is selected from the group of phosphate (P(V)) esters with general structure P(=O)(OR)₃, phosphonates with general structure RP(=O)(OR')₂, phosphinates with general structure R₂P(=O)(OR'), phosphoric acids, or phosphoric acid anhydrides. R and/or R' is preferably hydrogen or a C1-C4 group. More preferably, the phosphate salt and/or organic phosphate is H₃PO₄, P₂O₅, trimethyl phosphate (TMP), or tributyl phosphate (TBP).

Preferably the phosphate salt or organic phosphate is present in the mixture in an amount such that the molar P:Al ratio is between about 0.020 and about 0.250, more preferably between about 0.020 and about 0.108, even more preferably between about 0.054 and about 0.108.

### (v) solvent comprising a glycol

The mixture comprises a solvent comprising one or more glycols. Preferably, the sum content of the glycols in the solvent is at least about 90 vol.%, preferably at least about 95 vol.% of said one or more glycols, more preferably at least about 98 vol.% of said one or more glycols, most preferably at least about 99 vol.%. The salts and/or alkoxides are soluble in the solvent.

A glycol is generally known as an organic compound which comprises two hydroxyl groups. Preferably, the one or more glycols are chosen from the group of 1,4-butanediol, 1,3-butanediol, 1,2-butanediol, 1,5-pentanediol, 1,4-pentanediol, 1,3-pentanediol, 1,2-pentanediol, ethylene glycol, polyethylene glycol, and diethylene glycol. More preferably, the solvent comprises 1,4-butanediol and diethylene glycol. More preferably, the solvent comprises between about 75 and about 95 vol.% 1,4-butanediol and between about 5 and about 25 vol% diethylene glycol. Most preferably, the solvent comprises between about 80 and about 90 vol% 1,4-butanediol and between about 10 and about 20 vol% diethylene glycol. It has been found that this mixture works especially well with the invention.

The amount of solvent in the mixture may vary within wide limits. The skilled person is able to determine the amount enabling dissolution of the salts and/or alkoxides (i), (ii), (iii), and (iv). For example, the mixture can comprise the equivalent of about 1.8 mmol YAG or LuAG in about 90 mL glycol.

Preferably, the solvent comprises diethylene glycol in an amount to obtain a molar ratio of aluminum: diethylene glycol between about 0.012 and about 0.030. This is found improve the yield of nanoparticles with sizes < 20 nm.

### Drying/dehydrating or distillation prior to mixing

It has been found in prior art (Odziomek et al. J. Mater. Chem. C, 2017, 5,12561.) that nanoparticles with smaller size and less clustering or aggregation are obtained when less water is present.

Therefore, the amount of water present in the mixture is preferably less than about 1 wt.%, more preferably less than about 0.1 wt.%.

Preferably, the method comprises removing water from at least one of the (i) yttrium salt and/or alkoxide and/or lutetium salt and/or alkoxide, (ii) aluminum salt and/or alkoxide, (iii) rare earth metal salt and/or alkoxide, (iv) phosphate salt and/or organic phosphate and (v) the solvent comprising a glycol, prior to mixing. More preferably, the method comprises removing water from all of the (i) yttrium salt and/or alkoxide and/or lutetium salt and/or alkoxide, (ii) aluminum salt and/or alkoxide, (iii) rare earth metal salt and/or alkoxide, (iv) phosphate salt and/or organic phosphate and (v) the solvent comprising a glycol, prior to mixing.

Removing water may be effected in any suitable manner. Preferably, said removing water comprises drying and/or dehydrating of the yttrium salt, aluminum salt, rare earth metal salt and/or phosphate salt.

Removing of water may be performed using a Schlenk setup, in which one flask containing the salt is heated above about 100 °C, while vacuum is applied. The flask containing the salt is connected to another flask which is not heated and contains a desiccant, for example P₂O₅. Preferably, the flask containing the salt is heated to about 120 °C while vacuum is applied for several hours. More preferably, for about 12-18 hours. The dried salts are preferably stored in a dry and moisture free fashion.

Preferably, water is removed from the organic phosphate prior to mixing. The organic phosphate is preferably dried in a similar manner as described above for the salts.

Preferably, said removing water comprises distillation of the yttrium alkoxide, aluminum alkoxide and/or rare earth metal alkoxide, i.e. distillation of a metal alkoxide.

Removing of water may be performed with a Schlenk setup, in which one flask containing the metal alkoxide is heated to or slightly above the boiling point of the alkoxide while vacuum is applied. The flask containing the alkoxide is connected to another flask which is not heated. Pure metal alkoxide condenses in the empty flask when a temperature/pressure combination is reached which results in the boiling of the metal alkoxide. The pure metal alkoxide can then be stored in a dry and moisture free fashion. The skilled person is capable of controlling the temperature/pressure combination such that the metal alkoxide can be distilled.

Preferably, the aluminum is provided as aluminum isopropoxide which is distilled prior to mixing. The flask containing aluminum isopropoxide is heated to about 170 °C while vacuum is applied. Pure aluminum isopropoxide condenses in the empty flask when a temperature of about 135 °C is reached by a pressure of 10 mmHg. The purified aluminum isopropoxide is stored in a dry and moisture free fashion.

Preferably, the method comprises removing water from the glycol. This may be done by storing the glycol in an inert atmosphere and/or adding molecular sieves.

### Preparation of the mixture

The mixture may be prepared in any suitable manner. In a preferred embodiment, the preparation of the mixture comprises:
1 mixing the (i) yttrium salt and/or alkoxide and/or lutetium salt and/or alkoxide, (ii) aluminum salt and/or alkoxide and (iii) rare earth metal salt and/or alkoxide to obtain a first mixture.
2 adding the first mixture to the glycol and mixing to obtain a second mixture.
3 adding the (iv) phosphate salt and/or organic phosphate to the second mixture; and,
4 optionally, adding further (i) yttrium salt and/or alkoxide or lutetium salt and/or alkoxide and/or rare earth salt and/or alkoxide to said first or second mixture.
Mixing may be enhanced by using an Ultra-Turrax mixer, a vortex mixer, or another type of mixing equipment.

In an embodiment, said further (i) yttrium salt and/or alkoxide and/or lutetium salt and/or alkoxide and/or rare earth salt and/or alkoxide is added to the first mixture. In another embodiment, said further (i) yttrium salt and/or alkoxide and/or lutetium salt and/or alkoxide and/or rare earth salt and/or alkoxide is added to the second mixture. In all embodiments, a final mixture is formed.

### Stage b.

The method according to the invention comprises heating the mixture. This allows the salts and/or alkoxides and phosphate to dissolve in the solvent comprising the glycol.

Preferably, the mixture is heated in an autoclave reactor. Preferably, the autoclave reactor is purged with inert gas and heated to the reaction temperature, while stirring. The autoclave might be heated using either thermal radiation (conventional heating), or electromagnetic radiation (e.g. microwaves).

Preferably, the heating is effected at a temperature of at least about 190 °C, preferably at least about 280 °C, and/or at a temperature of at most about 340 °C, preferably at most about 320 °C. More preferably, the heating is effected at a temperature of about 300 °C.

Preferably, the heating is effected at pressure or results in an increased pressure. Preferably, said pressure is about 10 bar or more, preferably about 20 bar or more, and/or at a pressure of about 60 bar or less, preferably about 30 bar or less. More preferably, the heating is performed in a closed vessel, such as an autoclave reactor, such that the heating results in an increased pressure.

Preferably, said heating comprises heating for a period of at least about 1 hour, preferably at least about 1.5 hour, more preferably at least about 2 hours, and/or for a period of at most about 8 hours, preferably at most about 6 hours.

### Stage c.

The method of the invention comprises subjecting the mixture to a precipitation stage. As a result of the precipitation stage a precipitate comprising nanoparticles is obtained.

Preferably, the precipitation stage comprises allowing the mixture to cool. More preferably, if using an autoclave reactor, the autoclave reactor is cooled to room temperature before opening.

Preferably, the precipitation stage comprises a size selection step to remove large crystals from the reaction product. More preferably, the size selection step is performed by centrifugation of the mixture. For example, this may be done by centrifugation of the mixture at about 800-25000 RCF (relative centrifugal force), preferably about 20000 RCF, for about 2-120 minutes, preferably about 15-30 minutes.

Preferably, said subjecting the mixture to a precipitation stage comprises contacting said mixture with an antisolvent, more preferably wherein the antisolvent is a mixture of a polar organic solvent and a miscible non-polar organic solvent, even more preferably an alcohol or ketone and an ether, even more preferably a C1-C4 alcohol or ketone and an ether, even more preferably acetone and diethylether. The addition of antisolvent facilitates precipitation and the separation of the precipitate. Preferably, the antisolvent has a relatively low boiling point, as this facilitates removal of the liquid later in the process.

More preferably, the precipitation stage comprises contacting the mixture with an antisolvent, followed by centrifugation. Even more preferably, said contacting the mixture with an antisolvent, followed by centrifugation is repeated.

Preferably, the obtained nanoparticles are stored in a dry and moisture free environment.

Preferably, the method of the invention is executed in inert atmosphere, such as N₂ or Ar.

### Nanoparticles

According to the invention, there is further provided rare-earth metal doped garnet nanoparticles.

The methods as described above allow to obtain the nanoparticles of the invention.

The nanoparticles of the invention may comprise Y₃Al₅O₁₂:RE (YAG:RE), Lu₃Al₅O₁₂:RE (LuAG:RE) or (Yₓ,Lu₍₁₋ₓ₎)₃Al₅O₁₂:RE ((Lu,Y)AG:RE), wherein RE is a rare-earth metal x can have any value between 0 and 1.

Preferably, RE is cerium and/or terbium. The cerium and/or terbium is present as a trivalent ion, i.e. Ce³⁺ or Tb³⁺. Ce³⁺ shows, upon suitable excitation, yellow-green emission. Tb³⁺ shows, upon suitable excitation, green emission. More preferably, RE is a combination of cerium and terbium.

The rare earth metal is present as a dopant. Preferably, the doping ratio is between about 0.01% and about 3% for cerium doped nanoparticles, more preferably the doping ratio is about 2.5%. As used herein, the doping ratio is the percentage of doping ions relative to the total of doping ions and yttrium atoms in the crystal lattice.

Preferably, in the case of nanoparticles co-doped with both cerium and terbium, the doping ratio of cerium is between about 0.01% and about 2.5%, and the doping ratio of terbium is at least about 30%.

The nanoparticles comprise phosphorus, or comprise a Y₃Al₅O₁₂:RE (YAG:RE), Lu₃Al₅O₁₂:RE (LuAG:RE) or (Yₓ,Lu₍₁₋ₓ₎)₃Al₅O₁₂:RE ((Lu,Y)AG:RE) phase coexisting with a phosphorus-containing phase. As used herein, "coexist" means that the YAG:RE, LuAG:RE or (Y,Lu)AG:RE phase can be present in the same particle as the phosphorus-containing phase, but also that the phases may form discrete, separate particles in the same mixture. Phosphorus may be detected in the nanoparticles or in a mixture comprising the nanoparticles through elemental analysis, such as inductively coupled plasma mass spectroscopy (ICP-MS), or Energy Dispersive X-ray Spectroscopy (EDS).

More preferably, the phosphorus is present in a phosphate phase. Even more preferably, the phosphate phase is of the structure (Y and/or Lu and/or RE)PO₄.

In the nanoparticles of the invention, a YAG:RE-phase, LuAG:RE-phase or (Lu,Y)AG:RE-phase may coexist with a phosphate phase. Preferably, the phosphate phase is a (Y, Lu and/or RE)PO₄ phase or a mixture thereof. The (Y, Lu and/or RE)PO₄ phase may be attached to the YAG:RE or LuAG:RE nanoparticles. The (Y, Lu and/or RE)PO₄ phase may form a protective shell around the YAG:RE, LuAG:RE or (Y,Lu)AG:RE nanoparticles. The (Y, Lu and/or RE)PO₄ phase may form discrete, separate particles from the YAG:RE, LuAG:RE or (Y,Lu)AG:RE nanoparticles in the same mixture. The phosphate phase may be detected based on an optical fingerprint of (Y, Lu)PO₄:RE phase or (RE)PO₄ phase. The phosphate phase may also be detected by Energy Dispersive X-ray Spectroscopy (EDS), X-ray powder diffraction (XRD), or X-ray Photoelectron Spectroscopy (XPS).

Nanoparticles according to the invention include particles of which at least one dimension is at a nanometer scale, preferably ≤ 100 nm. Preferably, the nanoparticles according to the invention have at least one dimension ≤ 70 nm. Furthermore, the D₅₀ value of the smallest dimension of the nanoparticles is preferably ≥ 0.5 nm and ≤ 100 nm, more preferably ≥ 0.5 nm and ≤ 50 nm, most preferably ≥ 0.5 nm and ≤ 10 nm, as measured using transmission electron microscopy (TEM). D₅₀ is defined as the median value of the length of the smallest dimension of the nanoparticles, measured from an ensemble of at least 50 representative particles. The size of the nanoparticles can also be determined with a physisorption technique, for example N₂-physisorption.

The nanoparticles are preferably capable of luminescence.

The nanoparticles may show an increased photoluminescence quantum yield compared to YAG:RE or LuAG:RE nanoparticles known in the art. Preferably, the photoluminescence quantum yield is as high as possible and at least about 10%. More preferably, the photoluminescence quantum yield is at least about 30%. More preferably, the photoluminescence quantum yield is at least about 50%.

Preferably, the nanoparticles according to the invention are capable of emitting in the yellow and/or green spectral range. As used herein, the term green emitting material refers to a material, which, upon suitable excitation, has one or more emission bands between 510 nm to 560 nm.

More preferably, the nanoparticles wherein RE is cerium or both cerium and terbium according to the invention are capable of emitting in the yellow and/or green spectral range.

### Luminescent composition

There is further provided a luminescent composition comprising the nanoparticles obtainable by the method of the invention, or the nanoparticles of the invention.

Preferably, the luminescent composition comprises a first luminescent material and a second luminescent material, wherein at least one of said first luminescent material or said second luminescent material comprises the nanoparticles according to the invention or obtainable with the method according to the invention.

Preferably, the luminescent composition comprises a first luminescent material capable of emitting light in a first wavelength range and a second luminescent material being capable of absorbing light in a second wavelength range, and having an emission spectrum which overlaps at least partly with one or more of the excitation bands of said first luminescent material. At least one of said first luminescent material or said second luminescent material comprises the nanoparticles according to the invention or the nanoparticles obtainable with the method according to the invention.

Preferably, the first luminescent material and second luminescent material are so arranged to each other to allow non-radiative energy transfer from the second luminescent material to the first luminescent material.

Preferably, the luminescent composition is prepared in an inert atmosphere. Examples of inert atmospheres are nitrogen or argon atmospheres. Preferably, the luminescent composition is prepared by adding a dry solvent to a mixture of the first luminescent material and second luminescent material. A dry solvent is also known as an anhydrous solvent, and is a solvent that does not contain water. Examples of suitable solvents include short chain alcohols such as methanol and ethanol, and diethyl ether. The mixing of the two luminescent materials may be enhanced by stirring, shaking, or ultrasonication. The luminescent composition is subsequently dried.

The first luminescent material is capable of emitting light in a first wavelength range. The skilled person will understand that the first luminescent material functions as an emitting material in the luminescent composition according to the invention. The first wavelength range may be any wavelength range of interest. Preferred wavelength ranges will be described hereinafter.

The second luminescent material is capable of absorbing light in a second wavelength range. The skilled person will understand that the second luminescent material functions as a sensitizer material in the luminescent composition according to the invention. The second wavelength range may be any wavelength range of interest. Preferred wavelength ranges will be described hereinafter.

The second luminescent material has, when excited by light in the second wavelength range, an emission spectrum which overlaps at least partly with one or more excitation bands of said first luminescent material. The skilled person is well able to determine the overlap of the spectra based on spectra known in the art or by determining the spectra by routine experimentation, which is for example disclosed in WO2020/053429.

Preferably, the overlap of said emission spectrum of said second material and one or more excitation bands of said first material is in the blue (440 to 480 nm), green (510 to 560 nm) or yellow (560 to 580 nm) wavelength range.

Preferably, said first luminescent material and said second luminescent material are so arranged to each other to allow non-radiative energy transfer (sometimes also referred to as Fluorescent Resonance Energy Transfer, FRET) from said second luminescent material (sensitizer material) to said first luminescent material (emitter material). Generally, this comprises close proximity between the first and second luminescent materials, for instance from about 0.5 nm to about 20 nm in distance. The skilled person is well aware how non-radiative energy transfer may be achieved. This is, for instance, described in WO2018/167266. The skilled person will understand that non-radiative energy transfer involves non-radiative transfer of energy from an excited sensitizer material to an acceptor (or emitter) ion in the emitting material. It is evidenced by increased selective excitation of the sensitizer material resulting in increased emission from an emitter ion in the emitting material. The non-radiative energy transfer of interest may originate from either Förster- or Dexter-type energy transfer. In case quantum dots are used, especially Dexter-type energy transfer is of interest, due to the often delocalized wavefunctions in quantum dots, leading to increased distances at which efficient energy transfer can occur. The skilled person will realize that - since resonant energy transfer is in first order inversely proportional to inter-ion distance at the power of 6 (in case of Förster-type energy transfer), or exponentially proportional to the distance (in case of Dexter-type energy transfer) - the arrangement to allow non-radiative energy transfer may be effected by proper engineering of the effective distances between the sensitizer material and the emitter ions in the emitting material.

Preferably, the first luminescent material and/or the second luminescent material comprise rare-earth metal doped garnet nanoparticles. This allows a large interaction surface between the first and second material, which (further) enables non-radiative energy transfer to occur. The rare-earth metal doped garnet nanoparticles have desirable luminescent properties. Examples of a rare-earth metal doped garnet nanoparticles suitable for the first luminescent material and/or second luminescent material is YAG:RE nanoparticles, LuAG:RE nanoparticles, and/or the rare-earth metal doped garnet nanoparticles of the invention.

Preferably, the first luminescent material comprises the rare-earth metal doped garnet nanoparticles of the invention, where the rare-earth metal is terbium. These ions have desired absorption/emission characteristics.

Preferably, said second luminescent material comprises the rare-earth metal doped garnet nanoparticles according to the invention. The rare-earth metal doped garnet nanoparticles according to the invention are well suited for use in luminescent compositions. More preferably, the rare earth metal is cerium, or cerium and terbium. These ions have desired absorption/emission characteristics.

Preferably said first luminescent material and said second luminescent material are in the form of nanoparticles. Suitable nanoparticles include particles of which at least one dimension is at a nanometer scale, preferably ≤ 100 nm. The small size allows smaller distances between the surfaces of the first and second material, which (further) enables inter-particle non-radiative energy transfer to occur. Providing both materials in the form of nanoparticles allows more efficient mixing and even distribution of the particles, which further promotes inter-particle non-radiative energy transfer to occur.

As discussed, the D₅₀ value of the smallest dimension of the nanoparticles is preferably ≥ 0.5 nm and ≤ 100 nm, more preferably ≥ 0.5 nm and ≤ 50 nm, most preferably ≥ 0.5 nm and ≤ 10 nm, as measured using transmission electron microscopy (TEM). D₅₀ is defined as the median value of the length of the smallest dimension of the nanoparticles, measured from an ensemble of at least 50 representative particles.

In another preferred embodiment, the first luminescent material is provided as a bulk material with the second luminescent material provided on the first luminescent material. In this context the term "bulk" especially means and/or includes greater than nanoscale, for example greater than 100 nm in diameter and including micro-size scales.

As discussed, the second luminescent material may comprise the rare-earth metal doped garnet nanoparticles according to the invention. In compositions wherein the second luminescent material comprises the nanoparticles of the invention, the first luminescent material is preferably as described below. More preferably, the second luminescent material comprises the rare-earth metal doped garnet nanoparticles of the invention, wherein the rare earth metal is cerium or cerium and terbium, and the first luminescent material is as described below.

The skilled person will understand that the first and second material have to be in close proximity for FRET to occur. The nanoparticles according to the invention might be treated as described in WO2020/053429 and/or WO2021/043762.

### First luminescent material

The first luminescent material is capable of emitting light in a first wavelength range. The first wavelength range may be any wavelength range of interest.

Preferably, the first luminescent material comprises a red or green emitting material. As used herein the term red emitting material refers to a material which, upon suitable excitation, has one or more emission bands between 600 nm and 700 nm and the term green emitting material refers to a material which, upon suitable excitation, has one or more emission bands between 510 and 560 nm. Providing a red or green emitting material can be desirable for color rendering purposes. According to alternative aspects of the invention, the first luminescent material is a material having, upon suitable excitation, one or more emission bands between 700 and 1400 nm (IR-A), between 580 and 600 nm (amber and/or orange), between 560 and 580 nm (yellow), between 480 and 510 nm (cyan), between 440 and 480 nm (blue), between 400-440 nm (violet), between 315-400 nm (UV-A), and/or between 280-315 nm (UV-B).

In a preferred embodiment, the first luminescent material comprises a rare-earth doped phosphor material. The phosphor materials may be divalent or trivalent rare-earth doped phosphors. Examples of suitable rare-earth doped phosphor materials include, but are not limited to: LaPO₄:Eu³⁺ (and/or Tb³⁺), CaAlSiN₃:Eu²⁺, Y₂O₃:Eu³⁺ (and/or Tb³⁺), Y(V,P)O₄:Eu³⁺ (and/or Tb³⁺), Lu₃Al₅O₁₂:Ce³⁺ (or Eu³⁺ and/or Tb³⁺), Y₃Al₅O₁₂:Ce³⁺ (or Eu³⁺ and/or Tb³⁺), BaMgAl₁₄O₂₃:Mn²⁺, Mg(Al,Ga)₂O₄:Mn²⁺, Zn₂SiO₄:Mn²⁺, K₂SiF₆:Mn⁴⁺, MgF_{2.}GeO₂:Mn⁴⁺, and combinations thereof.

As discussed, the first luminescent material may comprise the rare-earth metal doped garnet nanoparticles according to the invention.

Phosphor materials may be procured today on the open market, or may be synthesized, for example as described in [Riwotzki, K.; Meyssamy, H.; Kornowski, A.; Haase, M. J. Phys. Chem. B. 2000, 104, 2824-2828].

As is known to the skilled person, rare-earth doped phosphor materials comprise a host lattice doped with optically active ions.

The first luminescent material may have any suitable host lattice. The host lattice may for instance be selected from the group consisting of oxides, fluorides, nitrides, borates, garnets, molybdates, phosphates, vanadates, chlorides, sulfides, selenides, silicates, aluminates, oxyfluorides, oxychlorides, oxynitrides, oxysulfides, oxyselenides, fluorochlorides, fluorosilicates and fluorobromides or combinations of these or another inorganic host material in which the optically active ions can be incorporated.

Preferably, the host lattice of the first luminescent material is an oxide, phosphate, vanadate or a combination thereof, more preferably selected from the group consisting of Y₃Al₅O₁₂ ("YAG"), Lu₃Al₅O₁₂ ("LuAG"), Y₂O₃, YVPO₄, YVO₄ or LaPO₄ or a combination thereof. Preferably, said preferred host lattice of the first luminescent material is doped with one or more ions selected from the group consisting of Eu³⁺, Tb³⁺, Mn²⁺ and Mn⁴⁺. These ions provide good emission characteristics, such as emission bands that are strong and/or in the red or green part of the visible spectrum.

In case of Eu³⁺ doping, the first luminescent material may for example have a host lattice doped having a doping ratio of at least about 10%, more preferably having a doping ratio of between about 15% and about 80%. In case Tb³⁺ doping, the first luminescent material may for example have a host lattice doped having a doping ratio of at least about 15%, more preferably between about 30% and about 80% Tb³⁺. In case of Mn⁴⁺ doping, the first luminescent material may for example have a host lattice doped having a doping ratio of about 0.1-30%, most preferably between about 1-10%. In case of Mn²⁺ doping, the first luminescent material may for example have a host lattice doped having a doping ratio of about 0.1-30%, most preferably between about 1-10%.

In an exemplary embodiment, the first luminescent material is selected from the group consisting of (Ca,Sr)Ga₂O₆:Eu³⁺ (or Tb³⁺), (Ca,Sr,Ba)La₂Bi₂(SiO₄)₃O:Eu³⁺ (or Tb³⁺), (Ca,Sr,Ba)SnO₃:Eu³⁺ (and/or Tb³⁺), (Ca,Y,Gd)MoO₄:Eu³⁺ (or Tb³⁺), (Y,Gd)BO₃ (pseudo-vaterite) :Eu³⁺ (or Tb³⁺), (Y,Tb)SiO₅:Eu³⁺ (or Tb³⁺), A-La₂O₃:Eu³⁺ (or Tb³⁺), Ba₂(SiO₄):O²⁻:Eu³⁺ (or Tb³⁺), Ba₂MgSi₂O₇:Eu³⁺ (or Tb³⁺), Ba₂Y(BO₃)₂Cl:Eu³⁺ (or Tb³⁺), Ba₃(PO₄)₂:Eu³⁺ (or Tb³⁺), Ba₃Ca₃(PO₄)₄:Eu³⁺ (or Tb³⁺), Ba₃Gd(BO₃)₃:Eu³⁺ (or Tb³⁺), Ba₃Gd₂(BO₃)₄:Eu³⁺ (or Tb³⁺), Ba₃La₂(BO₃)₄:Eu³⁺ (or Tb³⁺), Ba₃V₂O₈:Eu³⁺ (or Tb³⁺), Ba₃Y₂(BO₃)₄:Eu³⁺ (or Tb³⁺), BaB₈O₁₃:Eu³⁺ (or Tb³⁺), BaBPO₅:Eu³⁺ (or Tb³⁺), BaFCl:Eu³⁺ (or Tb³⁺), BaGd₂O₄:Eu³⁺ (or Tb³⁺), BaGd₄Si₅O₁₇:Sm:Eu³⁺ (or Tb³⁺), BaGdB₉O₁₆:Eu³⁺ (or Tb³⁺), BaLaB₉O₁₆:Eu³⁺ (or Tb³⁺), BaSO₄:Eu³⁺ (or Tb³⁺), BaY₂F₈:Yb:Eu³⁺ (or Tb³⁺), BaY₂Si₃O₁₀:Eu³⁺ (or Tb³⁺), BaYB₉O₁₆:Eu³⁺ (or Tb³⁺), BaZr(BO₃)₂:Eu³⁺ (or Tb³⁺), BaZrO₃:Eu³⁺ (or Tb³⁺), BaZrO₃:Eu³⁺ (or Tb³⁺), b-BaB₂O₄:Eu³⁺ (or Tb³⁺), B-Gd₂O₃:Eu³⁺ (or Tb³⁺), Ca₂Al(AlSiO₇) :Eu³⁺ (or Tb³⁺), Ca₂Gd₂(GeO₄)₂O:Eu³⁺ (or Tb³⁺), Ca₂Gd₈(SiO₄)₆O₂:Eu³⁺ (or Tb³⁺), Ca₂Gd₈Si₆O₂₆:Eu³⁺ (or Tb³⁺), Ca₂La₈(SiO₄)₆O₂:Eu³⁺ (or Tb³⁺), Ca₃(BO₃)₂:Eu³⁺ (or Tb³⁺), Ca₃Al₂O₆:Eu³⁺ (or Tb³⁺), Ca₃Gd₂(BO₃)₄:Eu³⁺ (or Tb³⁺), Ca₃La₂(BO₃)₄:Eu³⁺ (or Tb³⁺), Ca₃Y₂(BO₃)₄:Eu³⁺ (or Tb³⁺), Ca₄GdO(BO₃)₃:Eu³⁺ (or Tb³⁺), Ca₅(PO₁₁)₃F:Eu³⁺ (or Tb³⁺), Ca₅(PO₄)₃Br:Eu³⁺ (or Tb³⁺), Ca₅(PO₄)₃F:(4f-site) :Eu³⁺ (or Tb³⁺), Ca₅(PO₄)₃F:(6h-site) :Eu³⁺ (or Tb³⁺), Ca₅(PO₄)₃OH:Eu³⁺ (or Tb³⁺), CaBPO₅:Eu³⁺ (or Tb³⁺), CaF₂:Eu³⁺ (or Tb³⁺), CaLaB₇O₁₃:Eu³⁺ (or Tb³⁺), calcite-CaCO₃:Eu³⁺ (or Tb³⁺), CaO:Eu³⁺ (or Tb³⁺), CaSO₄:Eu³⁺ (or Tb³⁺), CaYO(BO₃):Eu³⁺ (or Tb³⁺), C-Gd₂O₃:Eu³⁺ (or Tb³⁺), C-Lu₂O₃:(C2) :Eu³⁺ (or Tb³⁺), C-Lu₂O₃:(C3i):Eu³⁺ (or Tb³⁺), Cs₂NaYF₆:Tm:Eu³⁺ (or Tb³⁺), C-Sc₂O₃:Yb:Eu³⁺ (or Tb³⁺), C-Y₂O₃:Eu³⁺ (or Tb³⁺), Eu³⁺ (or Tb³⁺)[(ttfa)3(phen)]0:Eu³⁺ (or Tb³⁺), Gd_{17.33}(BO₃)₄(B₂O₅)₂O₁₆:Eu³⁺ (or Tb³⁺), Gd₂BaZnO₅:Eu³⁺ (or Tb³⁺), Gd₂O₂(SO₄) :Eu³⁺ (or Tb³⁺), Gd₂P₄O₁₃:Eu³⁺ (or Tb³⁺), Gd₃O₄Br:Eu³⁺ (or Tb³⁺), Gd₃PO₇:Eu³⁺ (or Tb³⁺), Gd₃Te₂Li₃O₁₂:Eu³⁺ (or Tb³⁺), Gd₈P₂O₁₇:Eu³⁺ (or Tb³⁺), GdA₁₃ (BO₃)₄:Eu³⁺ (or Tb³⁺), GdAlO₃:Eu³⁺ (or Tb³⁺), GdAlO₃:Eu³⁺ (or Tb³⁺), GdB₃O₆:Eu³⁺ (or Tb³⁺), GdBO₃:Eu³⁺ (or Tb³⁺), GdGaO₃:Eu³⁺ (or Tb³⁺), GdOBr:Eu³⁺ (or Tb³⁺), GdOCl:Eu³⁺ (or Tb³⁺), GdP₃O₉:Eu³⁺ (or Tb³⁺), GdPO₄:Eu³⁺ (or Tb³⁺), I-CaB₂O₄:Eu³⁺ (or Tb³⁺), InBO₃:Eu³⁺ (or Tb³⁺), I-SrB₂O₄:Eu³⁺ (or Tb³⁺), KCaGd(PO₄)₂:Eu³⁺ (or Tb³⁺), La₂₆O₂₇(BO₃)₈:Eu³⁺ (or Tb³⁺), La₂BaZnO₅:Eu³⁺ (or Tb³⁺), La₂Hf₂O₇:Eu³⁺ (or Tb³⁺), La₂O₂(SO₄):Eu³⁺ (or Tb³⁺), La₂O₂S:Eu³⁺ (or Tb³⁺), La₂W₃O₁₂:Eu³⁺ (or Tb³⁺), La₂Zr₃(MoO₄)₉:Eu³⁺ (or Tb³⁺), La₃TaO₄Cl₆:Eu³⁺ (or Tb³⁺), La₃WO₆Cl₃:Eu³⁺ (or Tb³⁺), LaAlO₃:Eu³⁺ (or Tb³⁺), LaB₃O₆:Eu³⁺ (or Tb³⁺), LaBO₃:Eu³⁺ (or Tb³⁺), LaF₃:Eu³⁺ (or Tb³⁺), LaGaO₃:Eu³⁺ (or Tb³⁺), LaMgB₅O₁₀:Eu³⁺ (or Tb³⁺), LaOBr:Eu³⁺ (or Tb³⁺), LaOCl:Eu³⁺ (or Tb³⁺), LaOF:Eu³⁺ (or Tb³⁺), LaOI:Eu³⁺ (or Tb³⁺), LaP₃O₉:Eu³⁺ (or Tb³⁺), LaPO₄:Eu³⁺ (or Tb³⁺), LaYO₃:Eu³⁺ (or Tb³⁺), Li₂Lu₅O₄(BO₃)₃:Eu³⁺ (or Tb³⁺), Li₃Ba₂La₃(MoO₄)₈:Eu³⁺ (or Tb³⁺), Li₃La₂(BO₃)₃:Eu³⁺ (or Tb³⁺), Li₆Gd(BO₃)₃:Eu³⁺ (or Tb³⁺), Li₆Y(BO₃)₃:Eu³⁺ (or Tb³⁺), LiCaAlF₆:Eu³⁺ (or Tb³⁺), LiEu³⁺ (or Tb³⁺), Mo₂O₈:Eu³⁺ (or Tb³⁺), LiGd₆O₅(BO₃)₃:Eu³⁺ (or Tb³⁺), LiGdF₄:Eu³⁺ (or Tb³⁺), LiGdGeO₄:Eu³⁺ (or Tb³⁺), LiGdO₂:Eu³⁺ (or Tb³⁺), LiGdSiO₄:Eu³⁺ (or Tb³⁺), LiLa₂O₂BO₃:Eu³⁺ (or Tb³⁺), LiLaGeO₄:Eu³⁺ (or Tb³⁺), LiLaO₂:Eu³⁺ (or Tb³⁺), LiLaP₄O₁₂:Eu³⁺ (or Tb³⁺), LiLaSiO₄:Eu³⁺ (or Tb³⁺), LiLuGeO₄:Eu³⁺ (or Tb³⁺), LiLuO₂:Eu³⁺ (or Tb³⁺), LiLuSiO₄:Eu³⁺ (or Tb³⁺), LiScO₂:Eu³⁺ (or Tb³⁺), LiSr₂YO₄:Eu³⁺ (or Tb³⁺), LiSrAlF₆:Eu³⁺ (or Tb³⁺), LiY₆O₅(BO₃)₃:Eu³⁺ (or Tb³⁺), LiYF₄:Eu³⁺ (or Tb³⁺), LiYGeO₄:Eu³⁺ (or Tb³⁺), LiYO₂:Eu³⁺ (or Tb³⁺), LiYSiO₄:Eu³⁺ (or Tb³⁺), Lu₂O₂(SO₄):Eu³⁺ (or Tb³⁺), Lu₂Si₂O₇:Eu³⁺ (or Tb³⁺), Lu₃Al₅O₁₂:Eu³⁺ (or Tb³⁺), Lu₃Al₅O₁₂:Yb:Eu³⁺ (or Tb³⁺), LuBO₃:Eu³⁺ (or Tb³⁺), LuBO₃ (calcite):Eu³⁺ (or Tb³⁺), LuOCl:Eu³⁺ (or Tb³⁺), LuPO₄:Eu³⁺ (or Tb³⁺), Mg₂Gd₈(SiO₄)₆O₂:Eu³⁺ (or Tb³⁺), Mg₂La₈(SiO₄)₆O₂:Eu³⁺ (or Tb³⁺), MgO:Eu³⁺ (or Tb³⁺), MgSiO₃:Eu³⁺ (or Tb³⁺), Na₃YSi₃O₉:Eu³⁻ (or Tb³⁺), Na₆Gd(BO₃)₃:Eu³⁺ (or Tb³⁺), NaGdGeO₄:Eu³⁺ (or Tb³⁺), NaGdO₂:Eu³⁺ (or Tb³⁺), NaGdSiO₄:Eu³⁺ (or Tb³⁺), NaLaGeO₄:Eu³⁺ (or Tb³⁺), NaLaO₂:Eu³⁺ (or Tb³⁺), NaLaSiO₄:Eu³⁺ (or Tb³⁺), NaLuGeO₄:Eu³⁺ (or Tb³⁺), NaLuSiO₄:Eu³⁺ (or Tb³⁺), NaScO₂:Eu³⁺ (or Tb³⁺), NaSrLa(VO₄)₂:Eu³⁺ (or Tb³⁺), NaYGeO₄:Eu³⁺ (or Tb³⁺), NaYSiO₄:Eu³⁺ (or Tb³⁺), ScBO₃:Eu³⁺ (or Tb³⁺), ScOCl:Eu³⁺ (or Tb³⁺), ScPO₄:Eu³⁺ (or Tb³⁺), Sr₂B₂O₅:Eu³⁺ (or Tb³⁺), Sr₂Gd₈(SiO₄)₆O₂:Eu³⁺ (or Tb³⁺), Sr₂La₂Zn₂O₇:Eu³⁺ (or Tb³⁺), Sr₂La₂Zn₂O₇:Eu³⁺ (or Tb³⁺), Sr₂LaAlO₅:Eu³⁺ (or Tb³⁺), Sr₃(BO₃)₂:Eu³⁺ (or Tb³⁺), Sr₃(PO₄)₂:Eu³⁺ (or Tb³⁺), Sr₃(PO₄)₂:Sm:Eu³⁺ (or Tb³⁺), Sr₃Gd₂(BO₃)₄:Eu³⁺ (or Tb³⁺), Sr₃La₂(BO₃)₄:Eu³⁺ (or Tb³⁺), Sr₃La₆(SiO₄)₆:Eu³⁺ (or Tb³⁺), Sr₃Y₂(BO₃)₄:Eu³⁺ (or Tb³⁺), Sr₅(PO₄)₃F:Eu³⁺ (or Tb³⁺), Sr₉Ln(VO₄)₇:Eu³⁺ (or Tb³⁺), SrAl₂B₂O₇:Eu³⁺ (or Tb³⁺), SrB₄O₇:Eu³⁺ (or Tb³⁺), SrB₆O₁₀:Eu³⁺ (or Tb³⁺), SrCO₃:Eu³⁺ (or Tb³⁺), SrGdAlO₄:Eu³⁺ (or Tb³⁺), SrHfO₃:Tm:Eu³⁺ (or Tb³⁺), SrLa₂BeO₅:(4c):Eu³⁺ (or Tb³⁺), SrLa₂BeO₅:(8d):Eu³⁺ (or Tb³⁺), SrLaAlO₄:Eu³⁺ (or Tb³⁺), SrLaGa₃O₇:Eu³⁺ (or Tb³⁺), SrLaO(BO₃):Eu³⁺ (or Tb³⁺), SrO:Eu³⁺ (or Tb³⁺), SrY₂O₄:(Sr-site):Eu³⁺ (or Tb³⁺), SrY₂O₄:(Y-site1):Eu³⁺ (or Tb³⁺), SrY₂O₄:(Y-site2):Eu³⁺ (or Tb³⁺), Tb₂Mo₃O₁₂:Eu³⁺ (or Tb³⁺), Tb₂W₃O₁₂:Eu³⁺ (or Tb³⁺), TbBO₃:Eu³⁺ (or Tb³⁺), ThO₂:Eu³⁺ (or Tb³⁺), X1-Gd₂SiO₅:Eu³⁺ (or Tb³⁺), X1-Y₂SiO₅:Eu³⁺ (or Tb³⁺), X2-Y₂SiO₅:Eu³⁺ (or Tb³⁺), Y_{17.33}(BO₃)₄(B₂O₅)₂O₁₆:Eu³⁺ (or Tb³⁺), Y₂Ge₂O₇:Eu³⁺ (or Tb³⁺), Y₂GeO₅:Eu³⁺ (or Tb³⁺), Y₂O₂(SO₄):Eu³⁺ (or Tb³⁺), Y₂O₂S:Eu³⁺ (or Tb³⁺), Y₂O₂S:Eu³⁺ (or Tb³⁺), Y₂O₃:Eu³⁺ (or Tb³⁺), Y₂P₄O₁₃:Eu³⁺ (or Tb³⁺), Y₂Si₂O₇:Eu³⁺ (or Tb³⁺), Y₂SiO₅:Eu³⁺ (or Tb³⁺), Y₃Al₅O₁₂:Eu³⁺ (or Tb³⁺), Y₃O₄Br:Eu³⁺ (or Tb³⁺), Y₃O₄Cl:Eu³⁺ (or Tb³⁺), Y₃PO₇:Eu³⁺ (or Tb³⁺), Y₄GeO₈:Eu³⁺ (or Tb³⁺), Y₈P₂O₁₇:Eu³⁺ (or Tb³⁺), YAl₃(BO₃)₄:Eu³⁺ (or Tb³⁺), YAlO₃:Eu³⁺ (or Tb³⁺), YBO₃:Eu³⁺ (or Tb³⁺), YbOBr:Yb:Eu³⁺ (or Tb³⁺), YF₃:Eu³⁺ (or Tb³⁺), YOBr:Eu³⁺ (or Tb³⁺), YOCl:Eu³⁺ (or Tb³⁺), YOCl:Eu³⁺ (or Tb³⁺), YOF:Eu³⁺ (or Tb³⁺), YOF:Eu³⁺ (or Tb³⁺), YP₃O₉:Eu³⁺ (or Tb³⁺), YPO₄:Eu³⁺ (or Tb³⁺), YTaO₄:Eu³⁺ (or Tb³⁺), YVO₄:Eu³⁺ (or Tb³⁺), ZrP₂O₇:Eu³⁺ (or Tb³⁺), Y₃Al₅O₁₂:Ce³⁺, Lu₃Al₅O₁₂:Ce³⁺ or mixtures thereof.

The skilled person will understand that the notation :Eu³⁺ (or :Tb³⁺ or :Ce³⁺ or :Mn²⁺ or :Mn⁴⁺) indicates that the host lattice is doped with Eu³⁺ (or with Tb³⁺, or with Ce³⁺ or with Mn²⁺ or with Mn⁴⁺).

### Second luminescent material

The second luminescent material preferably comprises the rare-earth metal doped garnet nanoparticles according to the invention. In such compositions, the rare earth metal is preferably cerium and/or terbium.

As discussed, the first luminescent material may comprise nanoparticles according to the invention. In compositions wherein the first luminescent material comprises the nanoparticles according to the invention, the second luminescent material is preferably as described below.

Any suitable inorganic luminescent material may be used as second luminescent material. The second material is capable of absorbing light in a second wavelength range. The second wavelength may be any wavelength range of interest.

Preferably, the second luminescent material has one or more excitation bands in the wavelength range between 380 to 580 nm, preferably wherein said second luminescent material has one or more excitation bands in the UV-A (315 to 400 nm), violet (400 to 440 nm), blue (440 to 480 nm) or green (510 to 560 nm) wavelength range, most preferably in the blue (440 to 480 nm) wavelength range. LEDs based on (Al,In,Ga)N provide efficient "pump" light generation in the violet to blue wavelength range (about 400 nm to about 480 nm). Examples of blue-excitable materials are CaAlSiN₃:Eu²⁺, Y₃Al₅O₁₂:Ce³⁺, CsPbBr₃, CdSe, InP.

In other aspects of the invention, the second luminescent material is a material having one or more excitation bands between 700 and 1400 nm (IR-A), between 580 and 600 nm (amber and/or orange), between 560 and 580 nm (yellow), between 510-560 nm (green), between 480 and 510 nm (cyan), between 440 and 480 nm (blue), between 400-440 nm (violet), between 315-400 nm (UV-A), and/or between 280-315 nm (UV-B).

In another preferred embodiment, the host lattice of the second luminescent material is a garnet, fluoride, silicate, phosphate or nitride, more preferably selected from the group consisting of Y₃Al₅O₁₂ ("YAG"), Lu₃Al₅O₁₂ ("LuAG"), MgF₂, CaF₂, Sr₂SiO₄, Ba₂SiO₄, Ca₂MgSi₂O₇, LiSrPO₄, CaAlSiN₃ or a combination thereof. Preferably, said preferred host lattice of the second luminescent material is doped with one or more ions selected from of the group consisting of Eu²⁺, Pb²⁺, Bi³⁺ and Ce³⁺, more preferably Eu²⁺ or Ce³⁺ in combination with Tb³⁺, most preferably Ce³⁺ in combination with Tb³⁺.

Preferably, the host lattice of the second luminescent material or precursor thereof is a garnet, such as Y₃Al₅O₁₂ ("YAG") or Lu₃Al₅O₁₂ ("LuAG") or a combination thereof. Most preferably, the host lattice is selected from the group consisting of Y₃Al₅O₁₂ ("YAG") or Lu₃Al₅O₁₂ ("LuAG") or a combination thereof and the dopant includes Ce³⁺, optionally in combination with Tb³⁺.

Preferably, in the case of Ce³⁺ doping, the second luminescent material has a host lattice doped at a level of about 0.05-5%, more preferably about 0.1-4%.

Preferably, the first luminescent material comprises Y₂O₃:RE, wherein RE is europium(III), and the second luminescent material comprises the rare-earth metal doped garnet nanoparticles according to the invention, wherein the rare earth metal is cerium and/or terbium. More preferably, the Y₂O₃:RE material is provided as nanoparticles.

In a preferred embodiment, the first luminescent material comprises rare-earth metal doped nanoparticles, wherein the rare earth metal is europium(III), and the second luminescent material comprises the rare-earth metal doped garnet nanoparticles of the invention, wherein the rare earth metal is cerium(III) and/or terbium(III).

The invention further relates to a light-emitting device comprising the luminescent material obtainable by the method according to the invention. Preferably the light-emitting device further comprises an excitation source for the luminescent material, such as for the second luminescent material. Preferably the excitation sources is a UV-A, violet, or blue light emitting material which emits light towards the luminescent material with a wavelength of 315-400 nm (UV-A), 400-440 nm (violet), or 440-480 nm (blue), more preferably between 430-465 nm.

The light emitting device may be constructed from a blue emitting LED with the rare-earth metal doped garnet nanoparticles or luminescent composition according to the inventions deposited on top of the LED chip. The nanoparticles according to the invention may be bound in a polymer or silicone slurry that is deposited on the blue LED chip and subsequently cured.

The invention further relates to a lighting system comprising a light emitting device according to the invention. Preferably, the lighting system is selected from the group consisting of a lamp or luminaire, office lighting systems, household application systems, shop lighting systems, home lighting systems, accent lighting systems, spot lighting systems, theatre lighting systems, fibre-optics application systems, projection systems, self-lit display systems, pixelated display systems, segmented display systems, warning sign systems, medical lighting application systems, indicator sign systems, and decorative lighting systems, portable systems, automotive applications and green house lighting systems.

The invention further relates to the use of luminescent compositions according to the invention or luminescent materials comprising the rare-earth metal doped garnet nanoparticles of the invention as a taggant. A taggant is a marker added to materials to allow various forms of testing. The overall excitation/emission spectra of the luminescent materials and/or luminescent compositions according to the invention may have unique signatures, compared to conventional approaches, such that they may be useful as taggants in anti-counterfeiting applications. For instance, US7667828B discloses a tagging system containing multiple types of taggants that differ from each other.

The invention will now further be illustrated using the following examples, without however being limited thereto.

### EXAMPLES

### Comparative experiment A:

The following procedure was performed, as described by reference Odziomek et al. J. Mater. Chem. C, 2017, 5,12561.

Commercial aluminum isopropoxide powder was placed in a flask connected by a short U-bend glass tube with an empty Schlenk flask. The latter was connected to a vacuum pump. Then vacuum was slowly applied to prevent the powders from getting sucked into the pump. The flask with isopropoxide was then slowly heated to 170°C while maintaining the vacuum in the system. Pure transparent thick aluminum isopropoxide liquid was slowly condensed into the empty Schlenk flask when the vapor temperature reached 135°C at a pressure of 10 mmHg. The distillation was stopped when no more liquid came out of the heated flask. Finally, the flask with freshly distilled aluminum isopropoxide was cooled down and then stored under argon at 100 °C.

Yttrium acetate was placed in a flask connected by a U-bend glass tube with another Schlenk flask filled with P₂O₅. The latter was connected with a vacuum line. Then vacuum was slowly applied to prevent the powders from getting sucked into the pump. The flask with acetate was heated at 120 °C for one night while maintaining the vacuum in the system. The white powder of P₂O₅ became colored and caramel-like in an exothermic process. The flask with yttrium acetate was then cooled down and the product stored under argon at 100 °C.

The above process was repeated with cerium acetate.

The as-purchased 1,4-butanediol and diethylene glycol were stored in an argon environment and dried with the presence of 4A molecular sieve.

The reaction process was performed under argon atmosphere to avoid water moisture. 8.8 mmol of distilled aluminium isopropoxide, 5.28 mmol of dried yttrium acetate and 0.2 mmol of cerium acetate was mixed in a beaker comprising 88 ml of glycol solvent composed of 13.2 ml (15% v/v) diethylene glycol and 74.8 ml (85% v/v) 1,4-butanediol.

The mixture was homogenized using an Ultra-Turrax mixer at 8000 RPM (round per minute) for 10 minutes.

The beaker with the mixture was transferred into a 300 ml autoclave with an additional 30 ml of the 1,4-butanediol/diethylene glycol (85/15 v/v) added to fill the gap between the autoclave and the beaker. The autoclave was purged with N₂ for 5 minutes and heated to 300°C (at a rate of 3°C/min) under constant mechanical stirring setting at 450 RPM, then maintained at 300 °C for 2 hours.

The autoclave was cooled down to room temperature before opening. The obtained colloidal solution was centrifuged at 19000 RCF (relative centrifugal force) for 25 minutes to remove bigger particles (if any were present). The supernatant containing the small nanoparticles was washed with a mixture of 100 mL acetone and 200 mL diethyl ether prior to centrifugation at 19000 RCF for 25 minutes. A second washing procedure was conducted with same amount of the acetone/diethyl ether mixture followed by centrifugation for 9 minutes, to remove residual glycol solvents. The product was dried and stored in a dry and inert atmosphere.

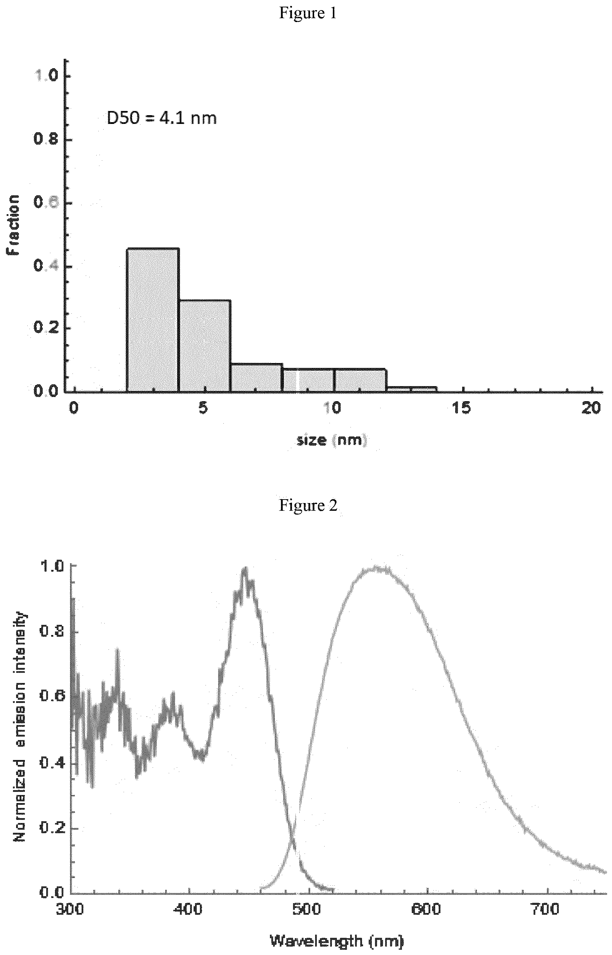

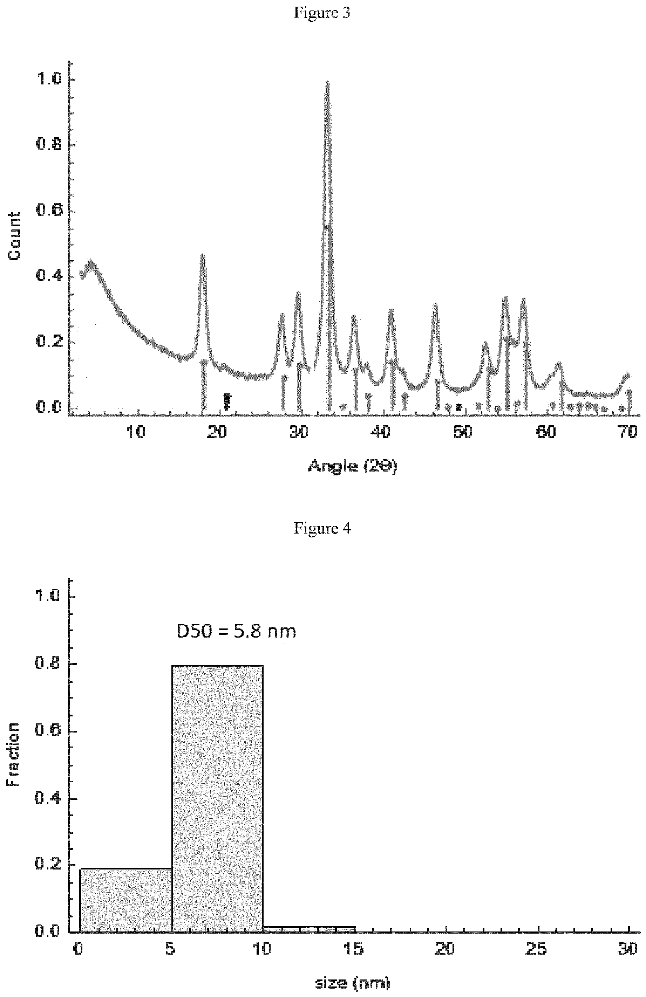

The quantum yield of the prepared YAG:Ce nanocrystals is 2.4%. A size histogram based on TEM image analysis is shown in Figure 1, showing a D₅₀ value of 4.1 nm. Emission and excitation spectra are shown in Figure 2, with the excitation being the left line and the emission being the right line. XRD is shown in Figure 3, showing diffraction peaks corresponding to the YAG phase. The AlO₄/AlO₆ ratio was calculated based on ²⁷Al NMR and determined to be 0.86 for this sample, which is much lower than 1.50 for a perfect crystalline YAG lattice.

### Comparative experiment B: extra Y, no P

Drying and distillation steps were performed as described above in the comparative experiment A. The process was performed under argon atmosphere to avoid water moisture.

8.8 mmol of distilled aluminium isopropoxide, 6.9 mmol of dried yttrium acetate and 0.2 mmol of cerium acetate was mixed in a beaker comprising 88 ml of glycol solvent composed of 13.2 ml (15% v/v) diethylene glycol and 74.8 ml (85% v/v) 1,4-butanediol.

The mixture was homogenized using an Ultra-Turrax mixer at 8000 RPM (round per minute) for 10 minutes.

The beaker with the mixture was then transferred into a 300 ml autoclave with an additional 30 ml of the 1,4-butanediol/diethylene glycol (85/15 v/v) added to fill the gap between the autoclave and the beaker. The autoclave was purged with N₂ for 5 minutes and heated to 300 °C (at a rate of 3 °C/minute) under constant mechanical stirring at 450 RPM, then maintained at 300 °C for 2 hours.

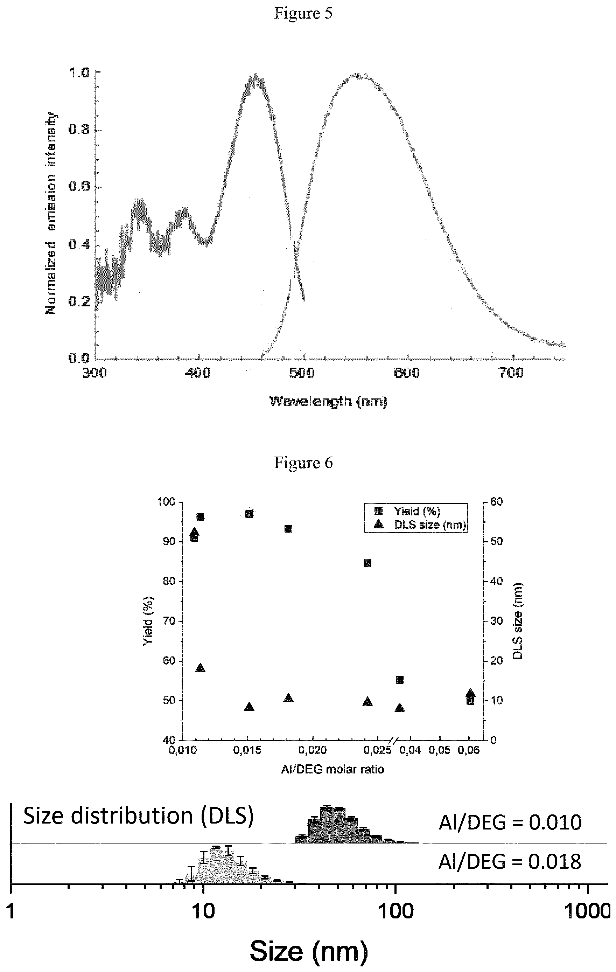

The quantum yield of the as-prepared cerium doped garnet nanocrystals was 2.17%. A size histogram based on TEM image analysis is shown in Figure 4, showing a D₅₀ value of 5.8 nm. Emission and excitation spectra are shown in Figure 5, wherein the excitation line is on the left and the emission line is on the right.

### Comparative C experiment: Al/DEG ratio

The procedure as described in comparative experiment A was followed, with variations in the solvent ratio.

Figure 6 shows the particle size and total yield of the small fraction as function of Al/diethylene glycol ratio. It can be seen that increasing aluminum resulted in smaller particles, but also in a smaller total yield.

### Example 1: YAG:Ce synthesis with PO₄

Drying and distillation steps were performed as described above in the comparative experiment A.

The process was performed under argon atmosphere to avoid water moisture.

8.8 mmol of distilled aluminium isopropoxide, 5.28 mmol of dried yttrium acetate and 0.2 mmol of cerium acetate was mixed in a beaker comprising 88 ml of glycol solvent composed of 13.2 ml (15% v/v) diethylene glycol and 74.8 ml (85% v/v) 1,4-butanediol.

0.48 mmol phosphoric acid (100% pure grade) was added to the mixture.

The mixture was homogenized using an Ultra-Turrax mixer at 8000 RPM (round per minute) for 10 minutes.

The beaker with the mixture was then transferred into a 300 ml autoclave with an additional 30 ml of the 1,4-butanediol/diethylene glycol (85/15 v/v) added to fill the gap between the autoclave and the beaker. The autoclave was purged with N₂ for 5 minutes and heated to 300 °C (at a rate of 3 °C/minute) under constant mechanical stirring at 450 RPM, then maintained at 300 °C for 2 hours.

The product was purified according to the steps described above in the comparative experiment A.

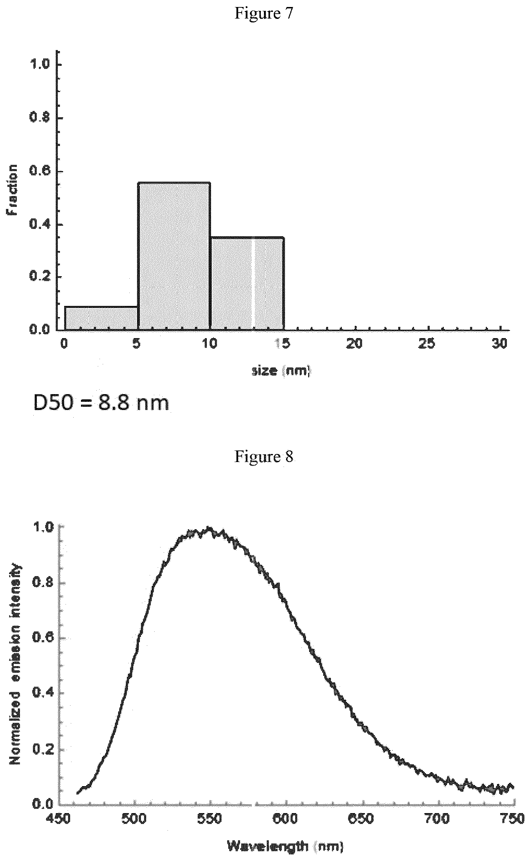

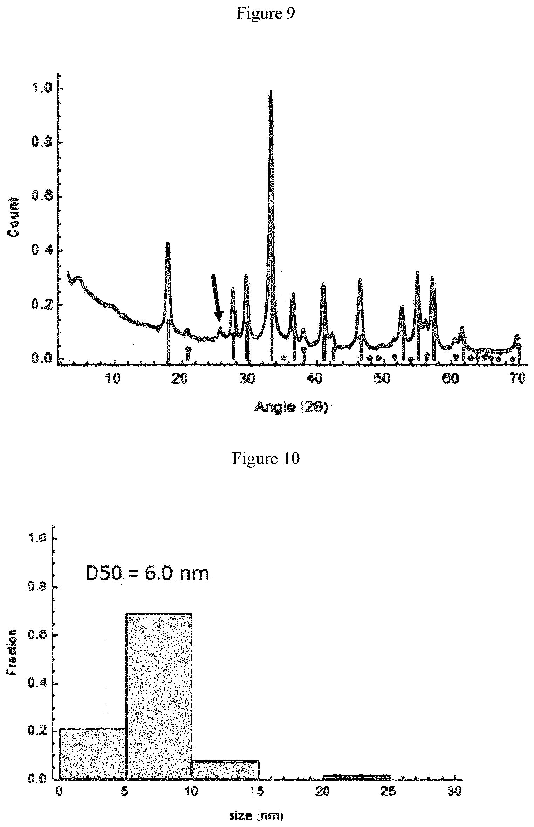

The quantum yield of the as-prepared cerium doped garnet nanocrystals is 13.1%. A size histogram based on TEM image analysis is shown in Figure 7, showing a D₅₀ value of 8.8 nm. Emission spectrum is shown in Figure 8. XRD is shown in Figure 9. The AlO₄/AlO₆ ratio was calculated based on ²⁷Al NMR and determined to be 0.71 for this sample.

### Example 2: YAG synthesis with PO₄ and extra Y

Drying and distillation steps were performed as described above in the comparative experiment A.

The process was performed under argon atmosphere to avoid water moisture.

8.8 mmol of distilled aluminium isopropoxide, 6.9 mmol of dried yttrium acetate and 0.2 mmol of cerium acetate was mixed in a beaker comprising 88 ml of glycol solvent composed of 13.2 ml (15% v/v) diethylene glycol and 74.8 ml (85% v/v) 1,4-butanediol.

0.48 mmol phosphoric acid (100% pure grade) was added to the mixture.

The mixture was homogenized using an Ultra-Turrax mixer at 8000 RPM (round per minute) for 10 minutes.

The beaker with the mixture was then transferred into a 300 ml autoclave with an additional 30 ml of the 1,4-butanediol/diethylene glycol (85/15 v/v) added to fill the gap between the autoclave and the beaker. The autoclave was purged with N₂ for 5 minutes and heated to 300 °C (at a rate of 3 °C/minute) under constant mechanical stirring at 450 RPM, then maintained at 300 °C for 2 hours.

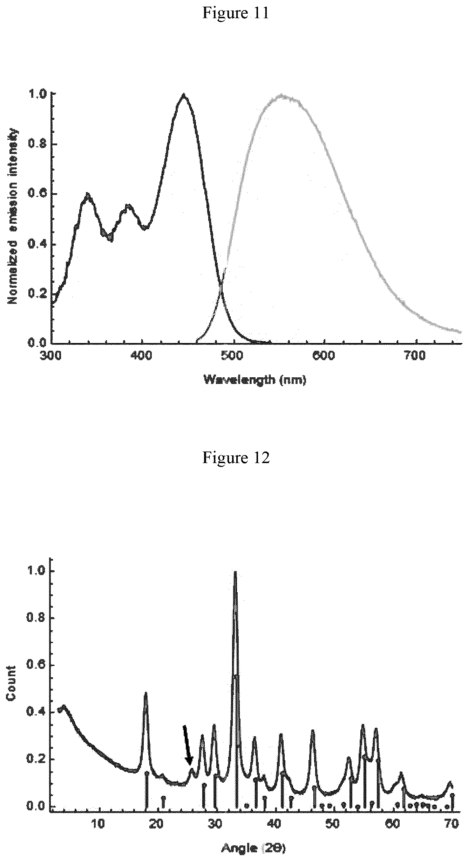

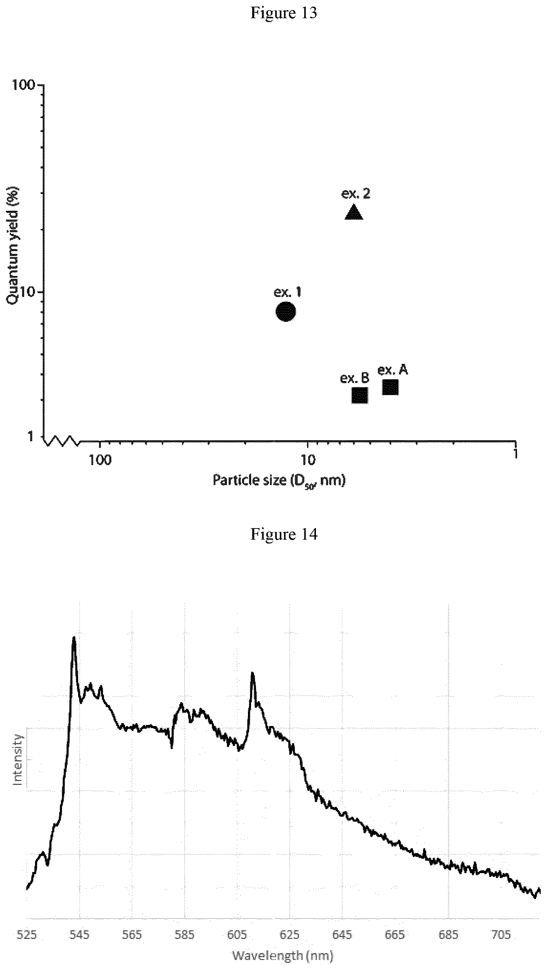

The quantum yield of the as-prepared cerium doped garnet nanocrystals was 24.8%. A size histogram based on TEM image analysis is shown in Figure 10, showing a D₅₀ value of 6.0 nm. Emission and excitation spectra are shown in Figure 11, wherein the excitation line is on the left side (shorter wavelengths) and the emission line is on the right side (longer wavelengths). XRD is shown in Figure 12. The AlO₄/AlO₆ ratio was calculated based on ²⁷Al NMR and determined to be 1.19 for this sample. This shows that the additional yttrium allowed for a more crystalline YAG-lattice. An overview picture of obtained particle sizes and QY of the samples described in the comparative experiments A and B and examples 1 and2 is shown in Figure 13.

### Example 3: Luminescent composition

In an inert atmosphere, the YAG:Ce nanoparticles according to the invention were mixed with Y₂O₃:Eu nanoplatelets in a 1:1 weight ratio.

5 mL dry methanol was added and the mixing was enhanced by sonification in an ultrasonic bath during 1.5 hours.

The mixture was dried.

Analysis with HAADF-STEM and EDS elemental mapping show that mixing on the nanoscale was achieved.

The luminescent composition was excited at 440 nm, which is where Ce³⁺ has an excitation band, but Tb³⁺ and Eu³⁺ do not, and the emission spectrum was recorded.

The emission spectrum of the luminescent composition in Figure 14 shows peaks characteristic for YAG:Ce,Tb and Eu³⁺, upon excitation of the Ce ions at a wavelength of 440 nm. This shows that IFRET is achieved.

## Claims

1. A method for preparing rare-earth metal doped garnet nanoparticles, comprising:
a. preparing a mixture comprising (i) yttrium salt and/or yttrium alkoxide and/or lutetium salt and/or lutetium alkoxide, (ii) aluminum salt and/or aluminum alkoxide, (iii) rare earth metal salt and/or rare earth metal alkoxide, (iv) phosphate salt and/or organic phosphate; and (v) a solvent comprising a glycol,
b. heating the mixture, and
c. subjecting the mixture to a precipitation stage.

2. The method according to claim 1, wherein the rare-earth metal is cerium, terbium, or a mixture thereof.

3. The method according to claim 1 or claim 2, wherein the phosphate salt and/or organic phosphate is selected from the group of phosphate (P(V)) esters with general structure P(=O)(OR)₃, phosphonates with general structure RP(=O)(OR')₂, phosphinates with general structure R₂P(=O)(OR'), and/or wherein the phosphate salt or organic phosphate is present in the mixture in an amount such that the molar P:Al ratio is between about 0.020 and about 0.250.

4. The method according to any preceding claim, wherein the solvent comprises diethylene glycol in an amount to obtain a molar ratio of aluminum:diethylene glycol of between about 0.012 and about 0.030.

5. The method according to any preceding claim, wherein the yttrium salt and/or yttrium alkoxide and/or lutetium salt and/or lutetium alkoxide is present in the mixture in an amount such that the molar (Y and/or Lu):Al ratio is at least about 0.25, preferably at least about 0.3, and/or such that the molar (Y and/or Lu):Al ratio is at most about 1.8, preferably at most about 1.75.

6. The method according to any preceding claim, wherein an autoclave reactor is used.

7. The method according to any preceding claim, wherein
- said heating comprises heating for a period of at least about 1 hour, preferably at least about 1.5 hour, more preferably at least about 2 hours, and/or for a period of at most about 8 hours, preferably at most about 6 hours;
- said heating is effected at, or results in, a pressure of 10 bar or more, preferably 20 bar or more, and/or a pressure of 60 bar or less, preferably 30 bar or less; and/or
- said heating is effected at a temperature of at least about 190 °C, preferably at least about 280 °C, and/or at a temperature of at most about 340 °C, preferably at most about 320 °C.

8. The method according to any preceding claim, wherein
- said precipitation stage comprises allowing the mixture to cool;
- said precipitation stage comprises a size selective precipitation to remove large crystals from the reaction product, wherein preferably the size selective precipitation is performed by sedimentation, possibly by centrifugation of the mixture; and/or
- said subjecting the mixture to a precipitation stage comprises contacting said mixture with an antisolvent, preferably wherein the antisolvent is a mixture of a polar organic solvent and a miscible non-polar organic solvent, more preferably an alcohol or ketone and an ether, more preferably a C1-C4 alcohol or ketone and an ether, more preferably acetone and diethylether.

9. Rare-earth metal doped garnet nanoparticles obtainable by the method according to any of the preceding claims, wherein the nanoparticles comprise phosphorus, or wherein the nanoparticles comprise a Y₃Al₅O₁₂:RE (YAG:RE), Lu₃Al₅O₁₂:RE (LuAG:RE) or (Yₓ,Lu₍₁₋ₓ₎)₃Al₅O₁₂:RE ((Lu,Y)AG:RE) phase coexisting with a phosphorus containing phase.

10. The nanoparticles of claim 9, wherein the phosphorus is present in a phosphate phase.

11. The nanoparticles of claim 9 or claim 10, wherein the D₅₀ value of the smallest dimension of the nanoparticles is ≥ 0.5 nm and ≤ 100 nm, preferably ≥ 0.5 nm and ≤ 50 nm, preferably ≥ 0.5 nm and ≤ 10 nm.

12. The nanoparticles of any of claims 9-11, wherein the quantum yield is at least about 10%, preferably at least about 30%, more preferably at least about 50%.

13. The nanoparticles of any of claims 9-12, capable of emitting in the green and/or yellow spectral range.

14. The nanoparticles of any of claims 9-13, wherein the rare-earth metal is cerium and/or terbium, preferably wherein the rare-earth metal ion is Ce³⁺ and/or Tb³⁺.

15. A luminescent composition comprising the nanoparticles according to any one of claims 9 to 14.

16. A luminescent composition according to claim 15, comprising a first luminescent material capable of emitting light in a first wavelength range and a second luminescent material being capable of absorbing light in a second wavelength range, and having an emission spectrum which overlaps at least partly with one or more of the excitation bands of said first luminescent material, wherein at least one of said first luminescent material or said second luminescent material comprises nanoparticles according to any one of claims 9 to 14,
preferably wherein the first luminescent material and second luminescent material are so arranged to each other to allow non-radiative energy transfer from the second luminescent material to the first luminescent material,
wherein preferably the second material comprises nanoparticles according to any of claims 9-14, and the first material comprises Y₂O₃:Eu³⁺ or Y₂O₃:Eu³⁺,Tb³⁺ nanoparticles.

17. Light emitting device comprising the luminescent composition according to any one of claims 15 to 16 and a violet and/or blue light emitting semiconductor material.

18. A system comprising the luminescent composition according to any one of claims 15 to 16 and/or a light emitting device according to claim 17, the system being one or more of the following:
a. office lighting systems
b. household application systems
c. shop lighting systems,
d. home lighting systems,
e. accent lighting systems,
f. spot lighting systems,
g. theatre lighting systems,
h. fibre-optics application systems,
i. projection systems,
j. self-lit display systems,
k. pixelated display systems,
l. segmented display systems,
m. warning sign systems,
n. medical lighting application systems,
o. indicator sign systems, and
p. decorative lighting systems
q. portable systems
r. automotive applications
s. green house lighting systems
t. display backlighting
u. emissive displays
v. microLEDs

19. Use of a luminescent composition according to any one of claims 15 to 16 as a taggant, for example in applications such as anti-counterfeiting.

## Patentansprüche

1. Verfahren zum Präparieren von mit Seltenerdmetallen dotierten Granat-Nanopartikeln, umfassend:
a) Präparieren einer Mischung umfassend (i) Yttriumsalz und/oder Yttriumalkoxid und/oder Lutetiumsalz und/oder Lutetiumalkoxid, (ii) Aluminiumsalz und/oder Aluminiumalkoxid, (iii) Seltenerdmetallsalz und/oder Seltenerdmteallalkoxid, (iv) Phosphatsalz und/oder organisches Phosphat; und (v) ein Lösemittel, das ein Glykol umfasst,
b) Erhitzen der Mischung, und
c) Aussetzen der Mischung an eine Fällungsstufe.

2. Verfahren nach Anspruch 1, wobei das Seltenerdmetall Zer, Terbium oder eine Mischung derselben ist.

3. Verfahren nach Anspruch 1 oder Anspruch 2, wobei das Phosphatsalz und/oder das organische Phosphat ausgewählt werden aus der Gruppe der Phosphat- (P(V)) Ester mit der allgemeinen Struktur P(=O)(OR)₃, der Phosphonate mit der allgemeinen Struktur RP(=O)(OR')₂, der Phosphinate mit der allgemeinen Struktur R₂P(=O)(OR'), und/oder wobei das Phosphatsalz oder das organische Phosphat in der Mischung in einer derartigen Menge vorliegt, dass das Stoffmengenverhältnis von P : Al zwischen ungefähr 0,020 und ungefähr 0,250 liegt.

4. Verfahren nach einem der vorhergehenden Ansprüche, wobei das Lösemittel Diethylenglykol in einer Menge umfasst, um ein Stoffmengenverhältnis von Aluminium : Diethylenglykol zu erzielen, das zwischen ungefähr 0,012 und ungefähr 0,030 liegt.

5. Verfahren nach einem der vorhergehenden Ansprüche, wobei das Yttriumsalz und/oder das Yttriumalkoxid und/oder das Lutetiumsalz und/oder das Lutetiumalkoxid in der Mischung in einer derartigen Menge vorliegen, dass das Stoffmengenverhältnis von (Y und/oder Lu) : Al mindestens ungefähr 0,25, bevorzugt mindestens ungefähr 0,3 beträgt, und/oder dass das Stoffmengenverhältnis (Y und/oder Lu) : Al höchstens ungefähr 1,8, bevorzugt höchstens ungefähr 1,75 beträgt.

6. Verfahren nach einem der vorhergehenden Ansprüche, wobei ein Autoklavreaktor verwendet wird.

7. Verfahren nach einem der vorhergehenden Ansprüche, wobei
- das Erhitzen ein Erhitzen während eines Zeitraums von mindestens ungefähr 1 Stunde, bevorzugt mindestens ungefähr 1,5 Stunden, weiter bevorzugt von mindestens ungefähr 2 Stunden und/oder während eines Zeitraums von höchstens ungefähr 8 Stunden, bevorzugt von höchstens ungefähr 6 Stunden umfasst;
- das Erhitzen bei einem Druck von 10 bar oder mehr, bevorzugt von 20 bar oder mehr, und/oder einem Druck von 60 bar oder weniger, bevorzugt von 30 bar oder weniger ausgeführt wird oder dazu führt; und/oder
- das Erhitzen bei einer Temperatur von mindestens ungefähr 190 °C, bevorzugt bei mindestens ungefähr 280 °C, und/oder bei einer Temperatur von höchstens ungefähr 340 °C, bevorzugt bei höchstens ungefähr 320 °C ausgeführt wird.

8. Verfahren nach einem der vorhergehenden Ansprüche, wobei
- die Fällungsstufe das Abkühlenlassen der Mischung umfasst;
- die Fällungsstufe eine größenselektive Fällung umfasst, um große Kristalle aus dem Reaktionserzeugnis zu entfernen, wobei die größenselektive Fällung bevorzugt durch Sedimentieren, gegebenenfalls durch Zentrifugieren, der Mischung ausgeführt wird; und/oder
- das Aussetzen der Mischung an eine Fällungsstufe das Kontaktieren des Gemischs mit einem Anti-Lösemittel umfasst, wobei das Anti-Lösemittel bevorzugt eine Mischung aus einem polaren organischen Lösemittel und einem mischbaren nicht polaren organischen Lösemittel, weiter bevorzugt ein Alkohol oder Keton und ein Ether, weiter bevorzugt ein C1-C4-Alkohol oder -Keton und -Ether, weiter bevorzugt Aceton und Diethylether ist.

9. Mit Seltenerdmetall dotierte Granat-Nanopartikel, die durch das Verfahren nach einem der vorhergehenden Ansprüche erzielt werden können, wobei die Nanopartikel Phosphor umfassen, oder wobei die Nanopartikel eine Y₃Al₅O₁₂ : RE- (YAG : RE), eine Lu₃Al₅O₁₂ : RE-(LuAG : RE) oder eine (Yₓ,Lu₍₁₋ₓ₎)₃Al₅O₁₂ : RE- ((Lu,Y)AG : RE) Phase, die mit einer phosphorhaltigen Phase koexistiert, umfassen.

10. Nanopartikel nach Anspruch 9, wobei der Phosphor in einer Phosphatphase vorhanden ist.

11. Nanopartikel nach Anspruch 9 oder Anspruch 10, wobei der D₅₀-Wert der kleinsten Dimension der Nanopartikel ≥ 0,5 nm und ≤ 100 nm, bevorzugt ≥ 0,5 nm und ≤ 50 nm, bevorzugt ≥ 0,5 nm und ≤ 10 nm ist.

12. Nanopartikel nach einem der Ansprüche 9 bis 11, wobei die Quantenausbeute mindestens ungefähr 10 %, bevorzugt mindestens ungefähr 30 % und höchst bevorzugt mindestens ungefähr 50 % beträgt.

13. Nanopartikel nach einem der Ansprüche 9 bis 12, die im grünen und/oder gelben Spektralbereich emittieren können.

14. Nanopartikel nach einem der Ansprüche 9 bis 13, wobei das Seltenerdmetall Zer und/oder Terbium ist, wobei Seltenerdmetall-Ion bevorzugt Ce³⁺ und/oder Tb³⁺ ist.

15. Leuchtzusammensetzung, umfassend Nanopartikel nach einem der Ansprüche 9 bis 14.

16. Leuchtzusammensetzung nach Anspruch 15, umfassend ein erstes Leuchtmaterial, das Licht in einem ersten Wellenlängenbereich emittieren kann, und ein zweites Leuchtmaterial, das Licht in einem zweiten Wellenlängenbereich absorbieren kann, und ein Emissionsspektrum aufweist, das sich mindestens teilweise mit einem oder mehreren Anregungsbändern des ersten Leuchtmaterials überlappt, wobei mindestens eines von dem ersten Leuchtmaterial oder dem zweiten Leuchtmaterial Nanopartikel nach einem der Ansprüche 9 bis 14 umfasst,
wobei bevorzugt das erste Leuchtmaterial und das zweite Leuchtmaterial im Verhältnis zueinander derart eingerichtet sind, dass sie eine nicht strahlende Energieübertragung von dem zweiten Leuchtmaterial auf das erste Leuchtmaterial ermöglichen,
wobei das zweite Material bevorzugt Nanopartikel nach einem der Ansprüche 9 bis 14 umfasst, und das erste Material Y₂O₃:Eu³⁺- oder Y₂O₃:Eu³⁺-,Tb³⁺-Nanopartikel umfasst.

17. Lichtemissionsvorrichtung, umfassend die Leuchtzusammensetzung nach einem der Ansprüche 15 bis 16 und ein violettes und/oder blaues Licht emittierendes Halbleitermaterial.

18. System, umfassend die Leuchtzusammensetzung nach einem der Ansprüche 15 bis 16 und/oder eine Lichtemissionsvorrichtung nach Anspruch 17, wobei das System einem oder mehreren der folgenden Systeme entspricht:
a) Bürobeleuchtungssystemen,
b) Haushaltsanwendungssystemen,
c) Ladenbeleuchtungssystemen,
d) Heimbeleuchtungssystemen,
e) Akzentbeleuchtungssystemen,
f) Punktbeleuchtungssystemen,
g) Theaterbeleuchtungssystemen,
h) faseroptischen Anwendungssystemen,
i) Projektionssystemen,
j) selbstbeleuchteten Anzeigesystemen,
k) verpixelten Anzeigesystemen,
l) segmentierten Anzeigesystemen,
m) Alarmsignalsystemen,
n) medizinischen Beleuchtungsanwendungssystemen,
o) Hinweisschildsystemen, und
p) dekorativen Beleuchtungssystemen,
q) tragbaren Systemen,
r) Autoanwendungen,
s) Treibhausbeleuchtungssystemen,
t) Anzeigenhintergrundbeleuchtung,
u) emittierende Anzeigen,
v) Mikro-LEDs.

19. Verwendung einer Leuchtzusammensetzung nach einem der Ansprüche 15 bis 16 als Markierungsstoff, zum Beispiel bei Anwendungen wie etwa zur Fälschungssicherung.

## Revendications

1. Procédé permettant de préparer des nanoparticules de grenat dopées aux métaux de terres rares, comprenant les étapes consistant à :
a) préparer un mélange comprenant (i) du sel d'yttrium et/ou de l'alkoxyde d'yttrium et/ou du sel de lutécium et/ou de l'alkoxyde de lutécium, (ii) du sel d'aluminium et/ou de l'alkoxyde d'aluminium, (iii) du sel de métal de terres rares et/ou de l'alkoxyde de métal de terres rares, (iv) du sel de phosphate et/ou du phosphate organique ; et (v) un solvant comprenant un glycol,
b) chauffer le mélange, et
c) soumettre le mélange à une étape de précipitation.

2. Procédé selon la revendication 1, dans lequel le métal de terres rares est du cérium, du terbium ou un mélange de ceux-ci.

3. Procédé selon la revendication 1 ou la revendication 2, dans lequel le sel de phosphate et/ou le phosphate organique sont sélectionnés à partir du groupe des esters de phosphate (P(V)) de la structure générale P(=O)(OR)₃, des phosphonates de la structure générale RP(=O)(OR')₂, des phosphinates de la structure générale R₂P(=O)(OR'), et/ou dans lequel le sel de phosphate ou le phosphate organique est présent dans le mélange dans une quantité telle que le rapport molaire P : Al est compris entre environ 0,020 et environ 0,250.

4. Procédé selon l'une quelconque des revendications précédentes, dans lequel le solvant comprend du diéthylène glycol dans une quantité permettant d'obtenir un rapport molaire aluminium : diéthylène glycol compris entre environ 0,012 et environ 0,030.

5. Procédé selon l'une quelconque des revendications précédentes, dans lequel le sel d'yttrium et/ou l'alkoxyde d'yttrium et/ou le sel de lutécium et/ou l'alkoxyde de lutécium sont présents dans le mélange dans une quantité telle que le rapport molaire (Y et/ou Lu) : Al est au moins environ 0,25, de préférence au moins environ 0,3, et/ou telle que le rapport molaire (Y et/ou Lu) : Al est au plus environ 1,8, de préférence au plus environ 1,75.

6. Procédé selon l'une quelconque des revendications précédentes, dans lequel un réacteur autoclave est utilisé.

7. Procédé selon l'une quelconque des revendications précédentes, dans lequel
- ledit chauffage comprend un chauffage pendant une période d'au moins environ 1 heure, de préférence d'au moins environ 1,5 heures, de plus grande préférence d'au moins environ 2 heures, et/ou pendant une période d'au plus environ 8 heures, de préférence d'au plus environ 6 heures ;
- ledit chauffage est effectué ou aboutit à une pression de 10 bar ou plus, de préférence de 20 bar ou plus, et/ou une pression de 60 bar ou moins, de préférence de 30 bar ou moins ; et/ou
- ledit chauffage est effectué à une température d'au moins environ 190 °C, de préférence d'au moins environ 280 °C, et/ou à une température d'au plus environ 340 °C, de préférence d'au plus environ 320 °C.

8. Procédé selon l'une quelconque des revendications précédentes, dans lequel
- ladite étape de précipitation comprend le fait de laisser le mélange refroidir ;
- ladite étape de précipitation comprend une précipitation sélective en taille pour retirer de gros cristaux du produit de réaction, la précipitation sélective en taille étant de préférence effectuée par sédimentation, éventuellement par centrifugation du mélange ; et/ou
- ladite soumission du mélange à une étape de précipitation comprend la mise en contact dudit mélange avec un antisolvant, de préférence dans lequel l'antisolvant est un mélange d'un solvant organique polaire et d'un solvant organique non polaire miscible, de plus grande préférence un alcool ou une cétone et un éther, de plus grande préférence un alcool ou cétone et un éther C1-C4, de plus grande préférence de l'acétone et de l'éther diéthylique.

9. Nanoparticules de grenat dopées aux métaux de terres rares pouvant être obtenues par le procédé selon l'une quelconque des revendications précédentes, dans lesquelles les nanoparticules comprennent du phosphore, ou dans lesquelles les nanoparticules comprennent une phase Y₃Al₅O₁₂ : RE (YAG : RE), Lu₃Al₅O₁₂ : RE (LuAG : RE) ou (Yₓ,Lu₍₁₋ₓ₎)₃Al₅O₁₂ : RE ((Lu,Y)AG : RE) coexistant avec une phase contenant du phosphore.

10. Nanoparticules selon la revendication 9, dans lesquelles le phosphore est présent dans une phase de phosphate.

11. Nanoparticules selon la revendication 9 ou la revendication 10, dans lesquelles la valeur D₅₀ de la plus petite dimension des nanoparticules est ≥ 0,5 nm et ≤ 100 nm, de préférence ≥ 0,5 nm et ≤ 50 nm, de préférence ≥ 0,5 nm et ≤ 10 nm.

12. Nanoparticules selon l'une quelconque des revendications 9 à 11, dans lesquelles le rendement quantique est d'au moins environ 10 %, de préférence d'au moins environ 30 %, de plus grande préférence d'au moins environ 50 %.

13. Nanoparticules selon l'une quelconque des revendications 9 à 12, capables d'émettre dans la plage spectrale du vert et/ou du jaune.

14. Nanoparticules selon l'une quelconque des revendications 9 à 13, dans lesquelles le métal de terres rares est du cérium et/ou du terbium, de préférence dans lesquelles l'ion de métal de terres rares est Ce³⁺ et/ou Tb³⁺.

15. Composition luminescente comprenant les nanoparticules selon l'une quelconque des revendications 9 à 14.

16. Composition luminescente selon la revendication 15, comprenant un premier matériau luminescent capable d'émettre de la lumière dans une première plage de longueurs d'onde et un deuxième matériau luminescent capable d'absorber de la lumière dans une deuxième plage de longueurs d'onde, et présentant un spectre d'émission qui se chevauche au moins partiellement avec une ou plusieurs des bandes d'excitation dudit premier matériau luminescent, dans laquelle au moins l'un du premier matériau luminescent ou dudit deuxième matériau luminescent comprend des nanoparticules selon l'une quelconque des revendications 9 à 14,
de préférence dans laquelle le premier matériau luminescent et le deuxième matériau luminescent sont agencés l'un par rapport à l'autre de façon à permettre un transfert d'énergie non radiatif du deuxième matériau luminescent au premier matériau luminescent,
dans laquelle de préférence le deuxième matériau comprend des nanoparticules selon l'une quelconque des revendications 9 à 14, et le premier matériau comprend des nanoparticules Y₂O₃:Eu³⁺ ou Y₂O₃:Eu³⁺,Tb³⁺.

17. Dispositif d'émission de lumière, comprenant la composition luminescente selon l'une quelconque des revendications 15 à 16 et un matériau semi-conducteur d'émission de lumière violette et/ou bleue.

18. Système, comprenant la composition luminescente selon l'une quelconque des revendications 15 à 16 et/ou un dispositif d'émission de lumière selon la revendication 17, le système étant un ou plusieurs des systèmes suivants :
a) des systèmes d'éclairage de bureau,
b) des systèmes d'application ménagère,
c) des systèmes d'éclairage de magasin,
d) des systèmes d'éclairage domestiques,
e) des systèmes d'éclairage accentués,
f) des systèmes d'éclairage ponctuels,
g) des systèmes d'éclairage de théâtre,
h) des systèmes d'application à fibre optique,
i) des systèmes de projection,
j) des systèmes d'affichage auto-éclairés,
k) des systèmes d'affichage pixélisés,
l) des systèmes d'affichage segmentés,
m) des systèmes de signaux d'alarme,
n) des systèmes d'application d'éclairage médical,
o) des systèmes de signaux indicateurs, et
p) des systèmes d'éclairage décoratifs,
q) des systèmes portables,
r) des applications automobiles,
s) des systèmes d'éclairage de serres,
t) du rétroéclairage d'affichage,
u) des affichages émissifs,
v) des microLED.

19. Utilisation d'une composition luminescente selon l'une quelconque des revendications 15 à 16 comme marqueur, par exemple dans des applications telles que la lutte contre la contrefaçon.
